# EUROPEAN PATENT APPLICATION

(11) **EP 4 782 174 A1**
(43) Date of publication of application: **29.07.2026**
(21) Application number: 26154181.7
(22) Date of filing: 26.01.2026
(51) Int. Cl.: B29C 44/14, B29C 44/30, B29C 44/32, B29C 44/46, B29K 75/00, B29K 105/04, B29L 7/00

(54) **APPARATUS AND METHOD FOR CONTINUOUS PROCESS FOAMING OF A PANEL**

(30) Priority: 28.01.2025 IT 202500001491
(71) Applicant: Cannon Ergos S.P.A., 20121 Milan (IT)
(72) Inventor: VOLPATO, Marco, 20121 Milano (IT); CORTI, Maurizio, 20121 Milano (IT); SAVIOLO, Luca Domenico, 20121 MILAN (IT); BOSCARI, Luciano, 20121 MILAN (IT)
(74) Representative: Luppi Intellectual Property S.r.l.

(57) **Abstract**

An apparatus (1) for continuous process foaming of a panel (2), of the type comprising an intermediate layer of expanded material (3) externally covered by covering and protective layers (4, 5), comprises an upper conveyor (6) belt supported by a respective upper support and guide frame (8) and a lower conveyor (7) belt supported by a respective lower support and guide frame (9), frame-support structures (19) configured to adjust a longitudinally uniform spacing between the upper conveyor (6) and the lower conveyor (7) to define a foaming gap (10) corresponding to a desired outlet thickness (S) for the panel (2), and geometry variator means configured to vary the reciprocal position between the first upper portion (15) and the first lower portion (16) to modify the geometric configuration of the foaming gap (10) in the first conveying zone (C) and define a longitudinally differentiated spacing between the first upper portion (15) and the first lower portion (16) to guide and facilitate the expansion of foam generated by a mixture of reactive resins, so as to reduce and minimise the amount of expanding agent required and optimise the cellulation of the foam. A method for continuous process foaming of the panel is also provided.

## Description

### BACKGROUND OF THE INVENTION

The invention relates to an apparatus and a method for continuous process foaming of a panel.

Specifically, but not exclusively, the apparatus and method according to the invention can be employed in the production of a panel of the type comprising an intermediate layer of expanded material externally covered by covering and protective layers or substrates. The expanded material may comprise a foam, for example a polymeric foam, in particular a polyurethane foam. The covering and protective substrates may include metal sheet or layers of plastic or paper.

### STATE OF THE ART

An apparatus is known for continuous process foaming of a panel, in which a pair of conveyors (upper and lower) is provided for conveying sheet materials intended to generate respectively the covering and protective layers for the intermediate layer of expanded material (also referred to as substrates). Each conveyor is provided with a respective loop conveyor belt supported by a respective support and guide frame.

US4042314A describes an apparatus for the continuous production of sheets made of phenolic resin.

Each conveyor belt may comprise a series of slats, also referred to as "slats", which are concatenated to one another or by a continuous sheet.

The two conveyors extend longitudinally from an inlet end to an outlet end and are arranged to convey the covering materials for the lower and upper surfaces of the panel in sheet form and the insulating material in the form of foam inside them along an advancement direction towards the outlet end.

The two conveyors are supported by a series of portal structures that support the respective support frames of the conveyor belts. Such portal structures are provided with supports that can be actuated vertically along the uprights of each portal, which allow adjustment of a longitudinally uniform spacing (along the advancement direction) between the upper conveyor belt and the lower conveyor belt so as to define a gap, within which the foam develops and consolidates by polymerising, corresponding to a desired thickness of the panel at the outlet from the pair of conveyors. Upstream, with respect to the advancement direction, dispensing means are arranged for dispensing a mixture of reactive resins to generate an intermediate layer of expanded material (foam) between the sheet materials.

During operation of the foaming apparatus, the mixture of reactive resins is dispensed in a metered quantity in an inlet zone upstream of said belts. The mixture, by reacting, expands until it fills the gap defined by the sheet materials, which, dragged by the respective conveyor belts, slide along the advancement direction.

In other words, the dispensing means pour a layer of mixture of reactive resins onto the inner face of the lower sheet material which, by sliding, drags the layer into the inlet zone of the conveyor, where, by expanding, it forms foam that increases in volume until it comes into contact with the inner face of the upper sheet material. Above the dispensing means, a further sheet material intended to generate the upper covering layer is fed along an inclined path converging towards the inlet section of the upper conveyor belt, until it comes into contact with the expanding foam. The lower sheet material, or lower covering substrate, slides beneath the dispensing means of the mixture of reactive resins, which distribute said mixture so as to cover the width of the lower covering sheet material; said layer of resin mixture is therefore distributed on the surface of the substrate in an almost homogeneous and continuous manner. The layer of reactive resins, immediately after touching the surface (which is heated), begins to form foam that expands vertically and laterally until it fills the entire section between the lower and upper covering materials to form the panel.

The apparatuses and methods for continuous process foaming of a panel of the state of the art present margins for improvement. In particular, one of the limitations of such known apparatuses and methods is the unsatisfactory structural formation homogeneity of the foam during the filling phase of the section between the external substrates, due to the effects of a wave front of the expanding foam that forms during the process of filling the section between the substrates.

The layer of expanding foam, before coming into contact with the upper sheet material or substrate, tends to expand with a preferential expansion direction that is vertical. While the layer of foam is conveyed into the inlet zone between the two conveyor belts, in the layer of resins that begin to react and form foam, a rapid expansion in the vertical direction occurs a few seconds after the deposition of the mixture of reactive resins on the lower substrate. The expansion is due to the combined action of the heat transmitted by the heated lower substrate and the heat developed by the chemical reaction.

In the conveying direction, that is, in the direction in which the foam is dragged, the expansion along the section between the two external covering layers is opposed by foam still forming, previously (more) expanded and occupying a greater height, thus having an increasing vertical dimension in the conveying direction, and which subsequently, by expanding, occupies the entire thickness of the section between the two external covering surfaces, generating pressure against said surfaces, opposing sliding in the conveying direction and also exerting a thrust in the opposite direction. In particular, the expansion of the mixture of reactive resins encounters greater resistance to expanding in the direction of movement of the substrates because it expands against foam that is more expanded and therefore has an increasing vertical dimension in the conveying direction. Therefore, since forward expansion (in the advancement direction) is hindered, the reactive mixture tends to expand vertically upwards and backwards (in the direction opposite to the advancement direction), forming a steep rising front in the shape of a wave, or wave front, which tends to overturn backwards.

The wave front forms at a certain distance from the zone where the reactive mixture is dispensed, and it is common practice to set the parameters of foam expansion speed (by adjusting catalysis and the amount of expanding agent present in the foam), substrate sheet speed (by setting the conveyor speed) and the amount of reactive resin mixture dispensed, so as to stabilise the wave front in a zone where the foam comes into contact with the upper substrate (that is, near the inlet end where the upper conveyor belt begins to exit from a front return curve of its support and guide frame and to travel along a longitudinal profile). Furthermore, in this zone the upper expansion surface of the foam, upon coming into contact with the upper substrate, begins to exert increasing pressure while the foam itself polymerises, increasing its viscosity.

The combined effects of the progress of foam expansion, opposed by the presence of a thickness of foam already in contact with the upper substrate in the advancement direction, and the rapid increase in viscosity in the zone where the wave front forms (downstream of the front itself), require the use of a certain amount of expanding agent, for example pentane or another blowing agent, dispersed in the polyol, which is necessary to counteract and overcome the thrust exerted, in the direction opposite to the conveying movement, by the foam front that comes into contact with the upper substrate. In other words, in the current technique, it is necessary to provide and disperse in the reactive mixture an additional amount of expanding agent required to counteract the pressure and thrust in the direction opposite to the conveying movement of the foam where the wave front forms. The foam in the wave front tends to have internal convolutive movements and creep near the surfaces with which it comes into contact, which oppose the homogeneous formation of the cells, forming cells stretched by sliding and also a layer of collapsed cells in contact with the upper substrate, with a thickness that increases as a function of the thrust exerted by the expansion pressure. This layer of collapsed cells is called "crust", the thickness of which depends on the rapidity of increase of the thrust against the surface. In other words, in the prior art, it is necessary to have in the reactive mixture a greater amount of expanding agent required to prevent the wave front from overturning backwards; however, this also implies a greater formation of crust thickness.

The crust may include a layer of expanded polyurethane formed in contact with the substrate. The crust is partly composed of compact material formed following the collapse of the foam cells for a certain thickness in contact with the substrate and partly of cells still in the form of bubbles that include small gaseous nuclei and thick separation membranes between one cell and the adjacent one. This crust layer forms because the foam collapses in contact with a surface on which it is pressed, as the contact and pressure degrade the effect of the surface tension that keeps the membranes of the individual cells in equilibrium with the internal gas pressure; furthermore, the foam cells near the crust also collapse as a function of the stretching they undergo due to creep and as a function of the pressure to which they are subjected.

In other words, a disadvantage of the prior art is the formation of a wave front inside the foaming gap, which makes the formation of part of the foam cells of the intermediate layer of expanded material non-homogeneous; in the prior art, to favour stabilisation of the wave front, the use of a greater amount of expanding agent in the reactive mixture is resorted to.

In light of the above, there are therefore wide margins for improvement for current apparatuses and methods for foaming panels in a continuous process. In particular, it would be desirable to have an apparatus and a method for continuous process foaming of a panel that is capable of controlling and favouring the expansion of the foam generated by the reactive mixture so as to reduce the amount of expanding agent required, both to improve the homogeneity of the foam structure and to reduce the formation of the crust of scarcely or non-expanded material near the sheet material substrates.

### OBJECTS OF THE INVENTION

An object of the invention is to improve current apparatuses and methods for continuous process foaming of a panel.

A further object is to provide an apparatus and a method for continuous process foaming of a panel that is capable of guiding and facilitating the expansion of the foam so as to reduce the amount of agent required for the formation and expansion of the foam and at the same time minimise the formation of crust of expanded material near the inner sheet material layers and thus allow optimal foam characteristics to be obtained.

### SUMMARY OF THE INVENTION

These and other objects are achieved by an apparatus and a method as defined in the appended claims.

Owing to the configuration of the geometry variator means it is possible to set in a desired manner the reciprocal position between a first upper portion of an upper conveyor and a first lower portion of a lower conveyor so as to vary the geometric configuration of the foaming gap in a first conveying zone and define a longitudinally differentiated spacing along the advancement direction between the first upper portion and the first lower portion in order to guide and facilitate the expansion of the foam generated by the mixture of reactive resins.

Other features and advantages will become clearly apparent from the following description.

### BRIEF DESCRIPTION OF THE DRAWINGS

The invention can be better understood and implemented with reference to the accompanying drawings, which illustrate some exemplary and non-limiting embodiments thereof, in which:

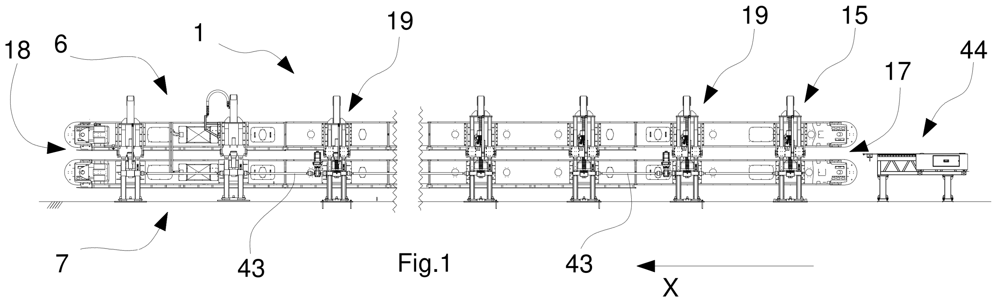

Figure 1 is a broken side view of a foaming apparatus;

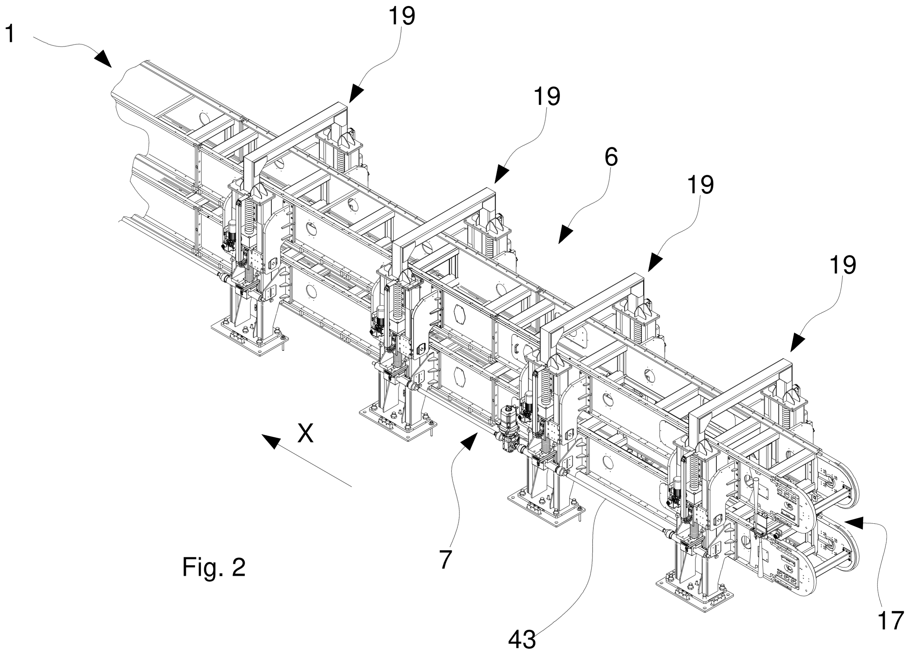

Figure 2 is a perspective view of a portion of the foaming apparatus shown on the right in Figure 1;
Figure 3 is a perspective view of an intermediate portion of the foaming apparatus of Figure 1;
Figure 3A is a perspective view of a portion of the apparatus of Figure 1 showing slats that make up the conveyor belt;
Figure 4 is a perspective view of a portion of a panel that can be produced by a foaming apparatus;
Figure 5 is a schematic side view of an inlet end of a foaming apparatus;
Figure 5A is a plan view of contiguous segments of sliding tracks according to a first embodiment of sliding tracks;
Figure 5B is a plan view of contiguous segments of sliding tracks according to a second embodiment of sliding tracks;
Figure 6 is a side view of a portion of a foaming apparatus showing the trace of a plane XVIII-XVIII orthogonal to an advancement direction;
Figure 7 is a perspective view of a first part of support and position variation actuator means according to a first embodiment;
Figure 8 is a section taken on plane XVIII-XVIII of Figure 6 of the first part of support and position variation actuator means of Figure 7;
Figure 9 is a perspective view of a modular trunk of an upper support and guide frame;
Figure 10 is a section of a second part of support and position variation actuator means taken along a horizontal median plane of the modular trunk of Figure 9;
Figure 11 is a section of a detail of a first part of support and position variation actuator means taken on a vertical plane orthogonal to the advancement direction;
Figure 12 is a section of a detail of both a first and a second part of support and position variation actuator means taken on the same plane as Figure 11;
Figure 13 is a perspective view of a further upper modular trunk of a support and guide frame provided with rotatable joint means at both ends;
Figure 14 is a section of a detail of a first part of rotatable joint means of Figure 13 taken on a horizontal median plane of the upper trunk;
Figure 15 is a side view of a portion of an upper modular trunk of a support and guide frame provided with structural lightening zones;
Figure 16 is a perspective view of an end of a modular trunk provided with joining faces between modular trunks with a portion of elastically yielding joining means according to a first version of a first embodiment of elastically yielding joining means, showing the trace of a horizontal plane XVII-XVII;
Figure 17 is a partial section taken on plane XVII-XVII of Figure 16;
Figure 18 is a section taken on a horizontal median plane of an upper frame trunk of elastically yielding joining means according to a second version of the first embodiment;
Figure 19 is a side view of elastically yielding joining means of Figures 16 and 17 according to the first embodiment in an interface and connection zone of two contiguous upper modular trunks;
Figure 20 is an exploded perspective view according to the advancement direction of rotatable joint means;
Figure 21 is a detailed side view of rotatable joint means between two adjacent upper modular trunks showing the trace of a vertical plane XXII-XXII orthogonal to the longitudinal development axis of the upper modular trunks;
Figure 22 is a section of the rotatable joint means taken on plane XXII-XXII;
Figure 23 is a side view of an upper modular trunk of a support and guide frame provided with rotatable joint means at its ends;
Figure 24 is a partial sectional side view of a first version of a second embodiment of elastically yielding joining means;
Figure 25 is a partial sectional side view of a second version of the second embodiment of elastically yielding joining means;
Figure 26 is a partial sectional side view of a third version of the second embodiment of elastically yielding joining means;
Figure 27 is a partial sectional side view of a first version of a third embodiment of elastically yielding joining means showing the trace of a horizontal plane XXVIII-XXVIII parallel to the longitudinal development axis of the upper modular trunks;
Figure 28 is a section taken on plane XXVIII-XXVIII of Figure 27;
Figure 29 is a partial sectional side view of a first version of a fourth embodiment of elastically yielding joining means;
Figure 30 is a partial sectional side view of a second version of the fourth embodiment of elastically yielding joining means;
Figure 31 is an elevation view of support and position variation actuator means according to a second embodiment;
Figure 32 is a partial sectional view of support and position variation actuator means of Figure 31.

### DETAILED DESCRIPTION

With reference to the accompanying figures, a foaming apparatus 1 for continuous process foaming of a panel is described.

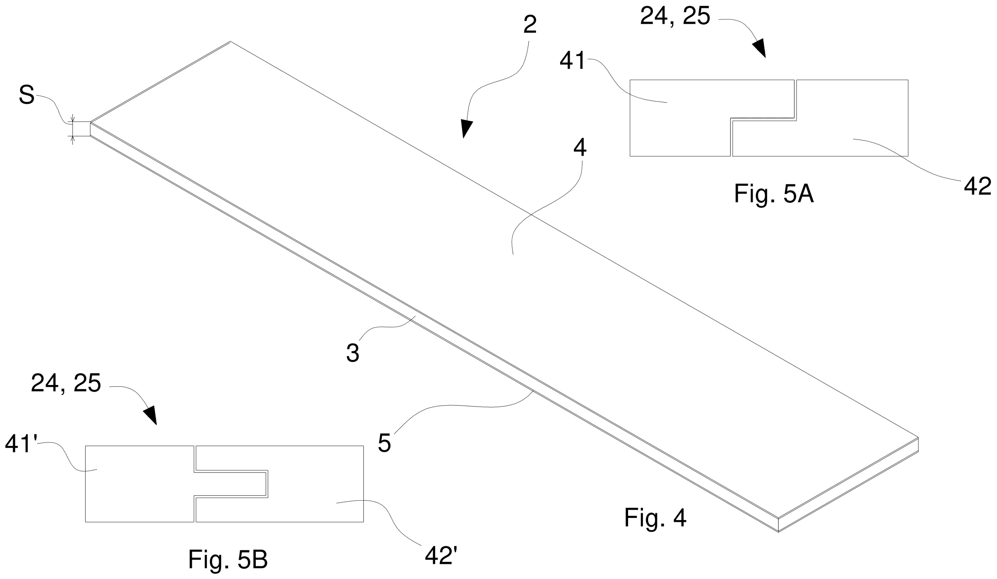

The foaming apparatus 1 can be employed in the production of a panel 2 of the type comprising an intermediate layer 3 of expanded material externally covered by covering and protective layers or substrates 4, 5 (Figure 4). The expanded material may comprise a foam, such as a polymeric foam, in particular a polyurethane foam. The covering and protective substrates 4, 5 may include metal sheet or layers of plastic or paper. The covering and protective substrates 4, 5 may comprise reinforcing fibres.

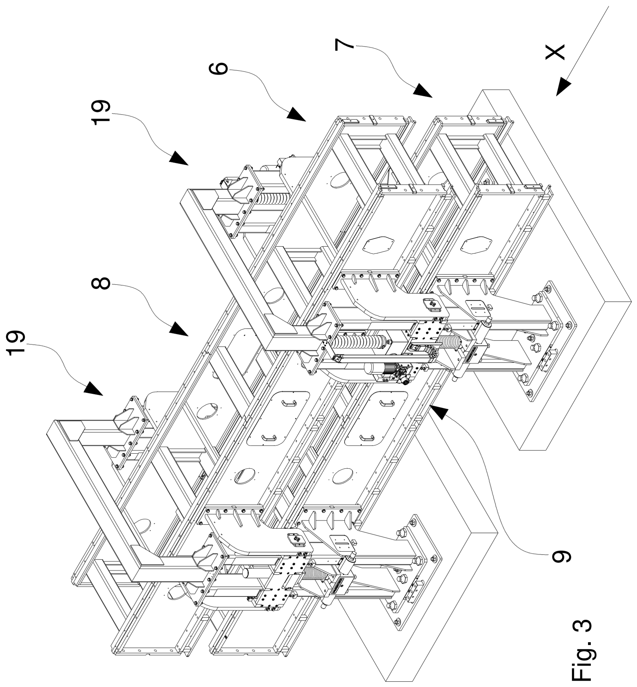

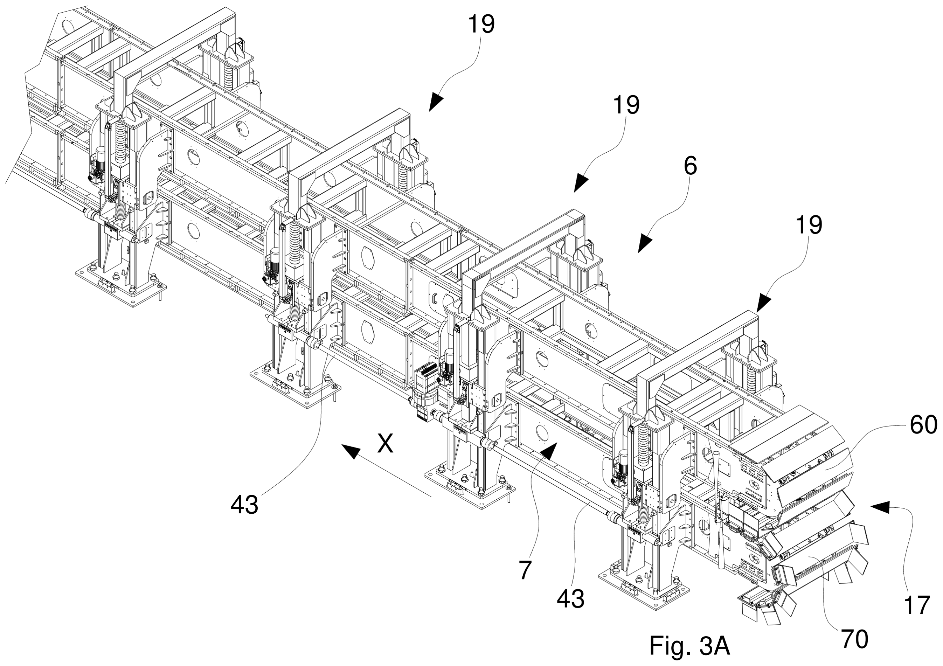

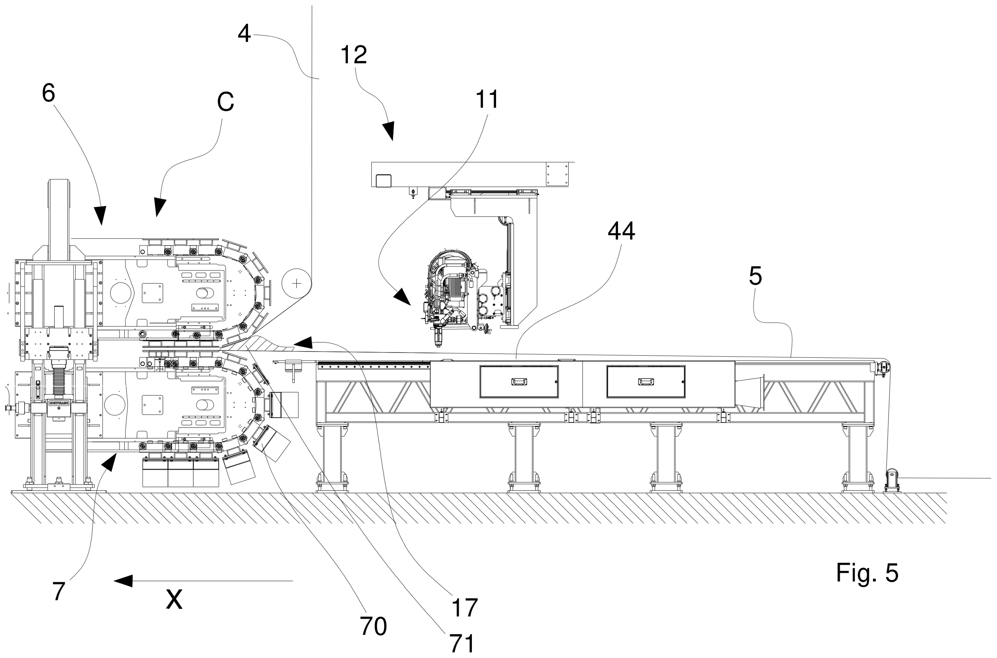

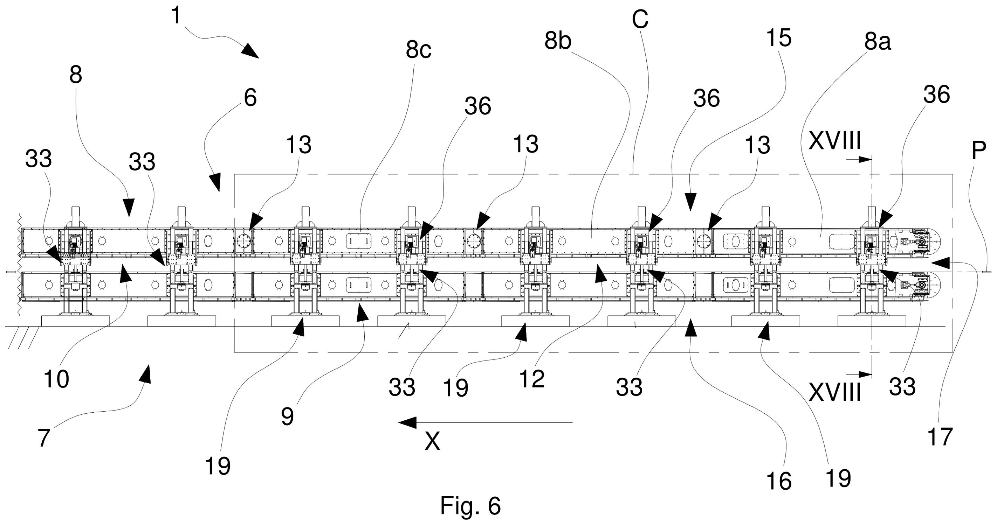

The foaming apparatus 1 comprises an upper conveyor 6 which in turn includes a first loop conveyor belt (shown partially in Figures 3A and 5) supported by a respective upper support and guide frame 8 (Figures 3 and 6) and a lower conveyor 7 which in turn includes a second loop conveyor belt (shown partially in Figures 3A and 5) supported by a respective lower support and guide frame 9 (Figures 3 and 6). In the illustrated embodiment, the upper and lower conveyor belts comprise a series of transport plates or slats 60, 70 (Figures 3A and 5), which will be explained in more detail below.

The upper conveyor belt 6 and the lower conveyor belt 7 extend longitudinally from an inlet end 17 to an outlet end 18.

The upper conveyor belt 6 and the lower conveyor belt 7 are arranged to convey, along an advancement direction X - towards the outlet end 18 - respective sheet materials intended to generate respectively the covering and protective layers 4, 5.

The foaming apparatus 1 comprises frame-support structures 19 arranged to constrain and support the upper support and guide frame 8 and the lower support and guide frame 9. The frame-support structures 19 are configured to adjust a longitudinally uniform spacing, along the advancement direction X, between the upper conveyor 6 and the lower conveyor 7 to define a foaming gap 10 corresponding to a desired thickness S (Figure 4) for the panel 2 at the outlet from the two conveyors 6, 7. In the illustrated embodiment of the foaming apparatus, the frame-support structures 19 comprise portal structures.

By longitudinally uniform spacing, in the context of the invention, it is meant that-in one or more specific zones of the apparatus-the upper conveyor 6 and the lower conveyor 7 have between them a substantially constant distance along the advancement direction X, that is, longitudinally. In other words, in said one or more specific zones of the apparatus 1, considering several cross sections orthogonal to the advancement direction, the surfaces of the conveyor belts (or equivalently the transport plates 60, 70 of the respective upper and lower conveyor belts) are spaced longitudinally by the same measure. This measure may correspond to the desired outlet thickness S of the panel being produced.

The foaming apparatus 1 comprises a first conveying zone C which extends from the inlet end 17 and is defined by a first upper portion 15 of the upper conveyor 6 and by a first lower portion 16 of the lower conveyor 7 (Figure 6).

In the illustrated embodiment of the apparatus, in a second conveying zone downstream of the first conveying zone C, the two conveyor belts (upper and lower) have mutually facing surfaces defining two respective planes with uniform relative spacing to delimit the foaming gap 10 so that the latter has a cross section (constant along the advancement direction X) having width and thickness S dimensions corresponding to those of the panel 2 at the outlet from the upper conveyor 6 and the lower conveyor 7. In these illustrated embodiment of the apparatus, the mutually facing surfaces are formed by transport plates 60, 70, also called "slats", which are mutually facing and contiguous in the advancement direction X during their advancement along direction X.

The foaming apparatus 1 comprises a dispensing zone 12 upstream of the inlet end 17 in which a pair of said sheet materials (covering materials) converges (Figure 5). In the context of the invention the term "upstream" is defined with respect to the advancement direction X.

The foaming apparatus 1 further comprises dispensing means 11 arranged to dispense continuously, onto one of the sheet materials intended to generate the lower covering and protective layer 4, a mixture of reactive resins intended to generate the intermediate layer 3 of expanded material of the panel 2 between the sheet materials. The dispensing means 11 are positioned in the dispensing zone 12 (Figure 5).

The mixture of reactive resins may comprise a mixture of polyurethane resins or a mixture of phenolic resins, at least one expanding agent, and at least one catalyst. In addition, other components may be provided in the mixture to obtain specific characteristics, for example improved fire resistance.

In the illustrated embodiment, the dispensing means 11 comprise one or more dispensers (for example three dispensers) positioned parallel in a transverse direction to the advancement direction X, provided with resin distribution devices of the rain type, parallel jets or blades. Such dispensers are configured to dispense a layer of mixture of reactive resins onto the lower substrate 5 (that is, onto the sheet material or strip formed by fibre paper or bituminous sheet or metal sheet that contains and forms the lower surface or face of the panel 2).

The foaming apparatus 1 further comprises geometry variator means arranged in the first conveying zone C and configured for setting, adjusting and varying the mutual position (i.e., varying the uniform longitudinal spacing) between the first upper portion 15 and the first lower portion 16 so as to modify the geometric configuration of the foaming gap 10 in the first conveying zone C and to define a longitudinally differentiated spacing along the advancement direction X between the first upper portion 15 and the first lower portion 16 for controlled guidance and facilitation of the expansion of the foam generated by the mixture of reactive resins, so as to reduce and minimize the quantity of expanding agent required (in particular when operating with two superposed conveyor belts) and optimize of the cellulation of said foam. In other words, the geometry variator means are configured for enabling and varying the geometric configuration of said foaming gap 10.

By differentiated spacing is meant the controlled variation of the geometry of the section of the foaming gap 10 within which the foam develops and consolidates for a longitudinal length greater than the point defined by the time of complete foam expansion (also called "rise time") multiplied by the speed spent for foaming; in other words, the inlet section to the upper belt is reduced in height compared to the section corresponding to the final thickness of the continuous panel. Such geometry is modified according to a settable curve (or angle) that varies said section between an inlet point and a point of connection with the section of continuous thickness.

In the illustrated embodiments, the first upper portion 15 is movable with respect to the first lower portion 16, which is stationary (and fixed with respect to a support plane of the apparatus), to define the differentiated spacing; this type of solution will be detailed later in the description. However, it is possible to provide a non-illustrated embodiment of the apparatus in which the first upper portion 15 is stationary (and fixed with respect to a support plan of the apparatus) and the first lower portion 16 is movable with respect to the first upper portion 15 to define the differentiated spacing. Alternatively, it is possible to provide a further non-illustrated embodiment of the apparatus in which both the first upper portion 15 and the first lower portion 16 are movable with respect to a stationary support plan of the apparatus to define the differentiated spacing.

In the illustrated embodiments, the upper support and guide frame 8 comprises several upper modular trunks interconnected by joining elements. More specifically, in the illustrated embodiments the first upper portion 15 is defined by upper modular trunks 8a, 8b, 8c, which we denote with subscript letters a, b, c. However, in further non-illustrated embodiments, it is possible to provide a first upper portion that is not limited to trunk c and may comprise further trunks. In other words, the apparatus may comprise a desired number n of modular trunks.

In the illustrated embodiments, the first lower portion 16 (of the lower support and guide frame 9) also comprises a series of lower modular trunks. In these illustrated embodiments, the upper modular trunks 8a, 8b, 8c, ..., 8n and the lower modular trunks are supported by the respective frame-support structures 19 (Figure 6).

In the continuation of the description, in some paragraphs, specific reference is made, for brevity, to adjacent modular trunks 8a, 8b; however-given the modularity of the trunks-a more generic reference is intended between any adjacent trunks, for example adjacent trunks 8b, 8c or other further adjacent trunks. Similarly, even when reference is made to the single modular trunk 8a, its description is also applicable to other single modular trunks such as modular trunk 8b or modular trunk 8c or another single trunk.

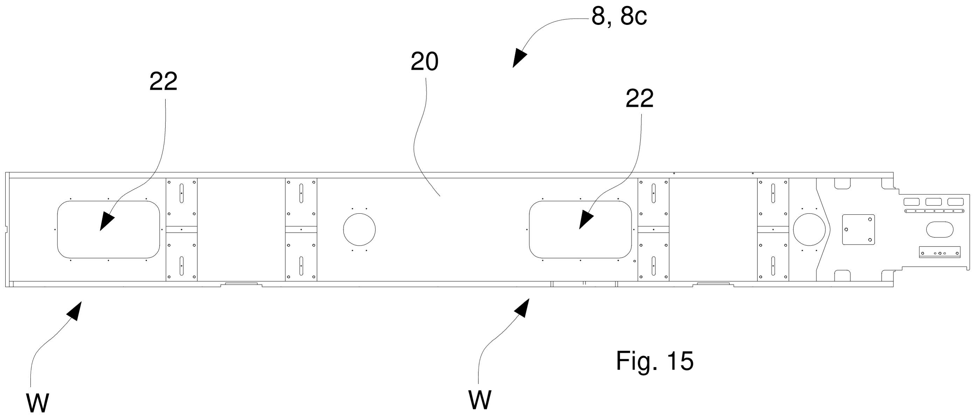

In one embodiment, the differentiated spacing is obtained by elastic deformation in bending and shear of the first upper portion 15 with respect to the first lower portion 16. As will be described later, in this embodiment, the differentiated spacing is obtained by elastic deformation of one or more (intermediate) lightening zones W of an upper trunk (for example trunk 8c, Figure 15).

In a further illustrated embodiment, the differentiated spacing is obtained by providing joint means that interconnect the upper modular trunks 8a, 8b, 8c, ..., 8n (Figures 15-19 and 24-30) and allow a certain reciprocal movement thereof.

In one of these further embodiments, as will be detailed below, elastically yielding joining means are provided, arranged to deform elastically (locally) at joining elements provided between the upper modular trunks 8a, 8b, 8c, ..., 8n.

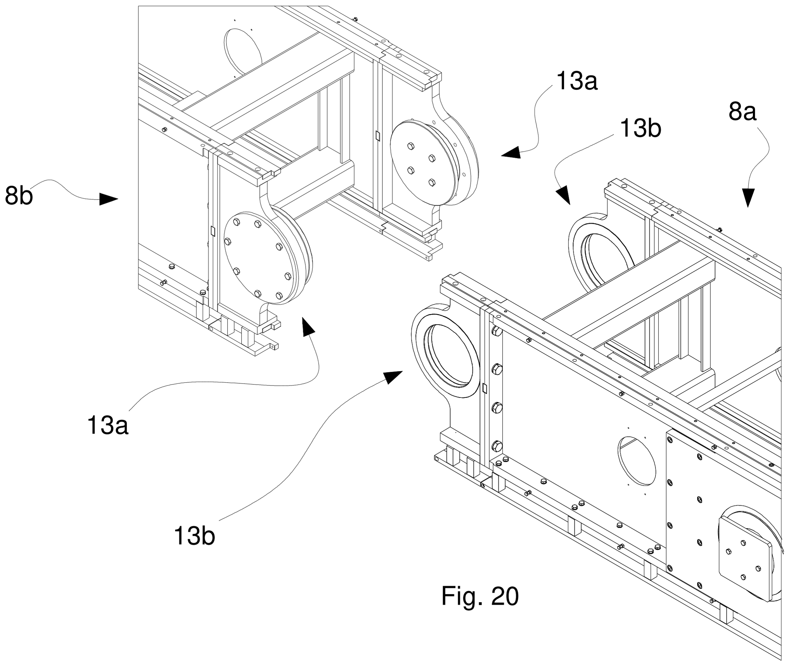

In another further illustrated embodiment, the differentiated spacing is obtained by providing rotatable joint means 13, by effect of a reciprocal rotation between the various contiguous modular trunks 8a, 8b, 8c, ..., 8n, which results in a roto-translation between the first upper portion 15 and the first lower portion 16. In this embodiment, the differentiated spacing is obtained by effect of one or more rotations at the respective joining element(s) of the upper modular trunks 8a, 8b, 8c, ..., 8n (Figures 5, 13, 20-22).

In all these embodiments, the differentiated spacing is obtained by differentiated positioning of the constraint elements 35 of the modular trunks 8a, 8b, 8c, ..., 8n.

In a further non-illustrated embodiment, as will be described later in this description, the differentiated spacing can be obtained by adjusting the position of sliding tracks of the conveyor belt so as to tilt the branch of the conveyor belt that faces the foaming gap 10.

The types of embodiments described, that is, the embodiments in which the differentiated spacing is obtained by deformation of one or more lightening zones, by elastically yielding joining means and by rotatable joint means, or by adjustment of the position of sliding tracks, may be alternative or may coexist in a single foaming apparatus.

The geometry variator means are settable to confer on the foaming gap 10 in the first conveying zone C a longitudinally divergent shape with an increasing transit section along the advancement direction X.

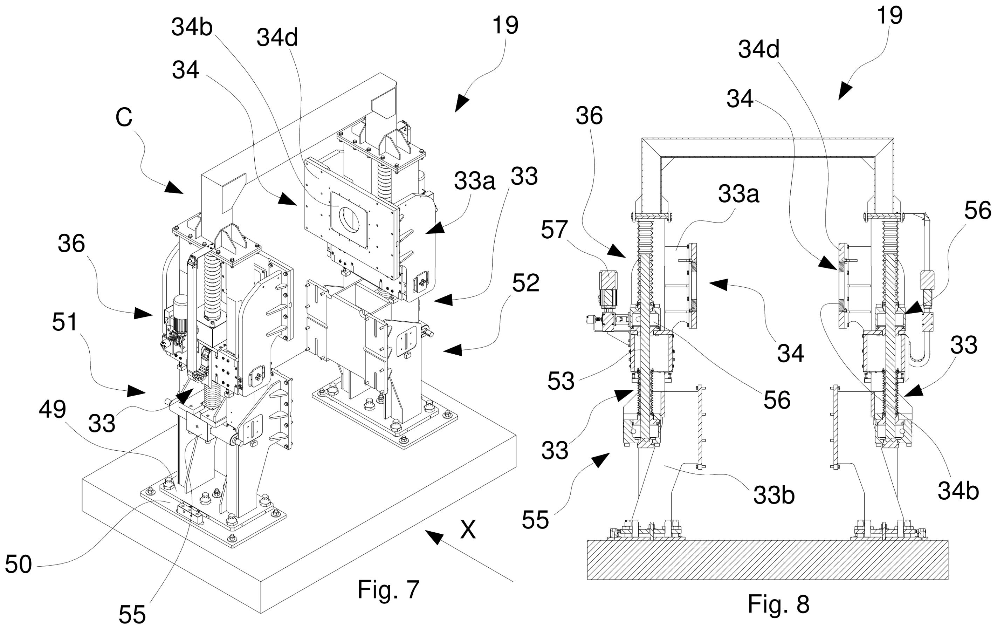

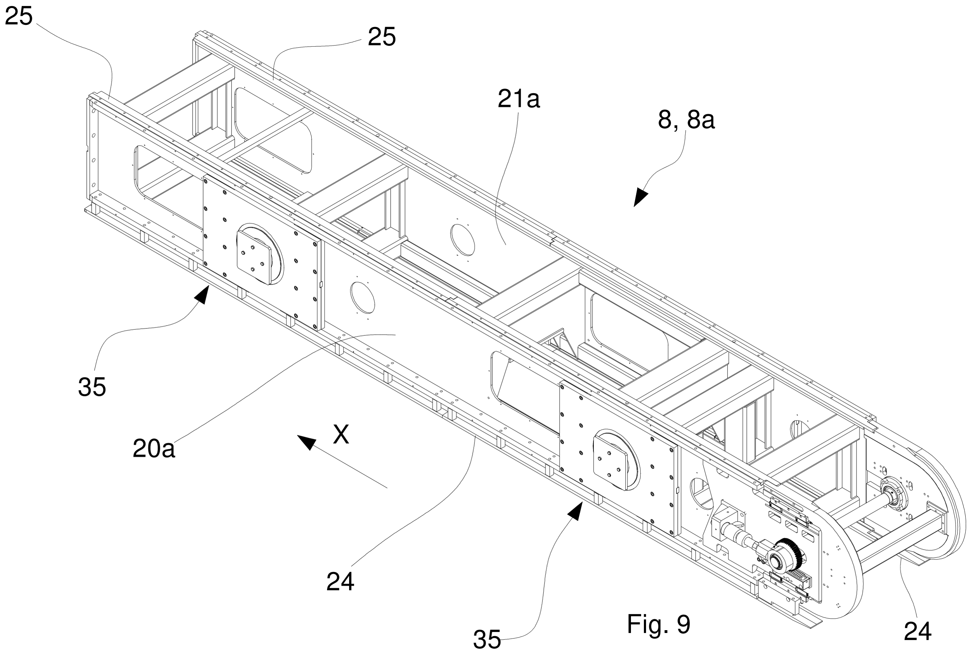

In the illustrated embodiments, the geometry variator means installed in the first conveying zone C comprise constraint support and position variation actuator means 33, 36 (Figure 9) mounted on the frame-support structures 19. The constraint support and position variation actuator means 33, 36 are configured to support the upper modular trunks 8a, 8b, 8c, ..., 8n at respective constraint elements 35 (which are integral with each of the upper modular trunks) and perform two distinct functions: adjustment of the longitudinally uniform spacing along the entire conveying zone and differentiated positioning of the constraint elements 35 so as to adjust the longitudinally differentiated spacing (with respect to the longitudinally uniform spacing) of at least one of the upper trunks 8a, 8b, 8c, ..., 8n with respect to the lower conveyor 7 (which is stationary). In the illustrated embodiments, as will be detailed below, the constraint elements 35 form part of a sliding hinge connecting unit 34, 35, 34' (Figures 7, 8 and 31, 32). Unlike the known art, in the foaming apparatus 1 the frame-support structures 19 carry the constraint support and position variation actuator means 33, 36 in the first conveying zone C.

As explained in more detail later in this description, the constraint support and position variation actuator means 33, 36 comprise lifting and support devices 33 for adjustment of the longitudinally uniform spacing along the entire conveying zone and differentiated actuating devices 36 for adjusting the longitudinally differentiated spacing of the constraint elements 35.

In other words, unlike the known art, in the conveying zone C the frame-support structures 19 carry (in addition to the lifting and support devices 33) the differentiated actuating devices 36, which are capable of performing the differentiated positioning of said constraint elements 35 of the modular trunks 8a, 8b, 8c, ..., 8n.

In the illustrated embodiments, the geometry variator means comprise an "active" part configured to set the first upper portion 15 (or equivalently one or more upper modular trunks) with a differentiated positioning thereof (or equivalently of the constraint elements 35 of one or more upper modular trunks), that is, the constraint support and position variation actuator means 33, 36, and a "passive" part configured to allow (facilitate) the variation of geometry of the foaming gap 10, that is, the variation of position of the first upper portion 15 (or equivalently of one or more upper modular trunks), namely one or more lightening (elastic) zones and/or the joint means (that is, the elastically yielding joining means and/or the rotatable joint means).

The first conveying zone C has a length defined as a function of the foam "rise time", that is, the time of complete expansion of the foam mass, and as a function of the speed of the upper and lower conveyors 6, 7. In one example, the first conveying zone C may have a length-taken along the advancement direction X starting from the inlet end 17 of the foaming apparatus 1-between 10 and 25 m, in particular 18 m.

In this first conveying zone C, along the advancement direction X, the cross section of the foaming gap 10 increases to reach the final dimension corresponding to the thickness of the panel being processed, up to 15% with respect to the cross section taken at the inlet end 17. In one example, the thickness of the panel at the outlet at constant section is 250 mm; at the inlet end 17, the distance between the conveyors, where the end of the curve of the upper belt converges, may be reduced to 217 mm.

The provision of an increase in the cross section of the foaming gap 10 along the advancement direction X allows a reduction of expanding agent that varies from 2% to 20% with respect to the amount necessary to obtain optimal foam cellulation characteristics in prior art apparatuses having a foaming gap with constant cross section.

As mentioned, in the illustrated embodiments, both the entire upper conveyor 6 and the entire lower conveyor 7 have a modular structure and are divided into respective trunks or modules with a length between 3 and 9 metres. The modular structure of the support and guide frames allows the construction of a relatively large foaming apparatus 1 with a longitudinal extension of the upper and lower conveyors 6, 7 that can reach up to 70 m.

In the illustrated embodiments, the first loop conveyor belt and the second loop conveyor belt comprise respective transport plates or slats 60, 70 (Figures 3A and 5) concatenated to one another for transporting and containing the panel 2 being formed. During operation of the foaming apparatus 1, the first and second conveyor belts follow closed paths along the respective (upper and lower) support and guide frames 8, 9. In the illustrated embodiments, the support and guide frames 8, 9 are provided with guides or sliding tracks 24, 25 (Figures 5A, 5B and 9) along the perimeter surfaces on which the individual transport plates 60, 70 slide. The transport plates 60, 70 are concatenated by joints and are supported and guided by rollers or ball bearings that roll along the sliding tracks. In use, the first and second conveyor belts recirculate along respective closed paths comprising upper and lower straight paths and two opposite return curves (at the inlet end 17 and the outlet end 18 of the foaming apparatus 1 respectively).

In a non-illustrated embodiment, the first conveyor belt and the second conveyor belt may comprise respective continuous flexible belts.

As mentioned, the upper support and guide frame 8 comprises several upper modular trunks 8a, 8b, 8c, ..., 8n.

The trunks or modules of the upper support and guide frame 8 and the lower support and guide frame 9 may be joined to one another by flanges with coupling surfaces joined by bolts and with positioning keys, as will be described later in this description.

In the illustrated embodiments, each trunk or module of the upper support and guide frame 8 and the lower support and guide frame 9 is supported by at least one pair of frame-support structures 19 (Figure 6). In other words, the upper modular trunks 8a, 8b, 8c, ..., 8n and the lower modular trunks are supported by the respective frame-support structures 19.

In the illustrated embodiments, each upper modular trunk 8a, 8b, 8c, ..., 8n comprises a corresponding pair of side walls 20a, 21a, ..., 20n, 21n defined by two parallel twin structures consisting of modular beams or plates (Figure 9).

These twin structures may have a central vertical web and two flanges reduced in width (horizontally with respect to direction X) and a relatively large thickness. In the illustrated embodiments, the flanges support the sliding tracks on which the concatenated plates of the respective conveyor belt slide. In particular, said side walls 20a, 20b, ..., 20n may have a cross section in the shape of a "C" or an "I".

The two side walls 20a, 21a, ..., 20n, 21n are coupled transversely and kept at a predetermined distance by connection and spacing beams for each of the modular trunks.

The transport plates 60, 70 are each provided with support and guide wheels (for example ball bearings) that allow them to slide along the sliding tracks fixed on the longitudinal outer surfaces of the flanges of the respective support and guide frame.

The transport plates 60, 70 forming the conveyor belt may all be identical or paired in identical couples. The transport plates 60, 70 are interconnected by joints and pins to form a continuous conveyor belt or chain. Such pins and joints may operate the chain traction of all the plates and are arranged so that, when the plates slide on the surfaces of the sliding tracks, they face each other by their long edges, so that said edges remain in contact or leave a minimal clearance between one edge and the adjacent one. This allows the creation of a plane on which the sheet material forming one of the external covering and protective layers 4, 5 of the panel 2 being produced rests and is conveyed.

In the illustrated embodiments, the upper sliding tracks 25 are fixed to the flanges of the support frames 8, 9 directly by screw means (Figure 9). Said upper sliding tracks 25 have a profile configured to act both as a vertical guide (support) on which the individual transport plates 60, 70 slide resting or suspended, and as a horizontal guide to keep the plates laterally guided.

In the upper portion of each support and guide frame 8, 9, the upper sliding tracks 25 are flat and, during operation, the transport plates 60, 70 rest on them by their own weight.

In the lower portion of each support and guide frame 8, 9, the lower sliding tracks 24 are constrained to the respective support and guide frame 8, 9 by spacers and are fixed by screw means. In use, the bearings or sliding wheels of each transport plate provide support for each transport plate or slat 60, 70 when they slide on the upper sliding tracks 25 of the upper portion of the support and guide frame 8, 9 and keep the transport plates 60, 70 suspended when they slide on the lower sliding tracks 24 of the lower portion of the support and guide frame 8, 9.

The support and guide function is also performed by curved guide and return heads of each conveyor 6, 7 (provided respectively at the inlet end 17 and the outlet end 18). In the illustrated embodiments, the curved heads are applied to opposite ends of each support and guide frame 8, 9. The outer profile of said curved heads has the same section as the sliding tracks 24, 25.

Two types of curved heads may be provided: a first type is simply formed by a rail or guide as described, shaped as a semicircle (as in the illustrated embodiments, see the upper trunk 8a of Figure 9); a second type (not illustrated) provides a toothed sprocket with profiled teeth to engage the wheels of each transport plate 60, 70 so as to drag them in rotation (similar to the service sprockets of a chain).

As mentioned, the frame-support structures 19 can support the two support and guide frames 8, 9 in height.

In the illustrated embodiments, the frame-support structures 19 comprise uprights or columns 51, 52.

As will be described later in this description, in the intermediate zones of said uprights 51, 52, differentiated actuating devices 36 are mounted, arranged to position respective motorised screw nut parts 56 integral with sliding hinge connecting units 34, 35, 34' mounted on the respective support and guide frames (Figure 7).

Each upright 51, 52 is provided with a base plate 49 arranged to abut a respective foundation 50.

In the illustrated embodiments, the lower support and guide frame 9 of the lower conveyor belt is fixed at a constant height, while the support and guide frame 8 that supports the upper conveyor belt can be adjusted in height by lifting and support devices 33 (lifting jacks) of each upright 51, 52. The lifting and support devices 33 are synchronised by a motorised transmission bar 43 (Figure 3A). The rotation of the transmission bar 43 is redirected at 90 degrees for each lifting and support device 33 so as to raise or lower the upper conveyor 6 while keeping it parallel to the lower conveyor 7 and achieve the adjustable separation (that is, the longitudinally uniform spacing) between the two conveyors 6, 7 to set the outlet thickness S of the panel 2.

The assembly of screw jacks and synchronised angular return mechanisms 55 forms part of the lifting and support devices 33 that adjust the vertical spacing between the conveyors 6, 7 and configure the outlet thickness S of the panel 2.

In the first conveying zone C, motorised screw nut parts 56 with the function of linear actuators are mounted on the lifting and support devices 33 (Figure 8). Said motorised screw nut parts 56 are settable to actuate the differential spacing along the screw of the jack (screw part 53) of the sliding hinge connecting units 34, 35, 34' connected to the respective upper modular trunks 8a, 8b, 8c, ..., 8n. As described later, the motorised screw nut parts 56 form part of the differentiated actuating devices 36.

During operation of the foaming apparatus 1, a first continuous sheet material intended to generate a lower external covering and protective layer 5 (that is, an external face) of the panel 2 to be formed is unwound continuously from a respective coil, placed resting on an upper surface of the lower conveyor belt and advanced together with the latter along the advancement direction X. Similarly, a second continuous sheet material intended to define the other upper covering and protective layer 4 of the panel 2 to be formed is unwound continuously from a further respective coil, placed resting on a lower surface of the upper conveyor belt and advanced together with the latter along the advancement direction X.

In the dispensing zone 12, in addition to the dispensing means 11, a table or sliding plane 44 may be provided on which the lower sheet material 5 slides (Figure 5).

In operation, the lower conveyor 7 is moved continuously and the mixture of reactive resins is also dispensed continuously by the dispensing means 11.

The dispensing means 11 pour and distribute a layer of the mixture of reactive resins over the transverse width of the second (lower) conveyor belt. Said layer of mixture of reactive resins has a liquid or creamy consistency; as a result of the chemical reaction and due to the presence of an expanding agent, which may be liquid or gaseous, gas is generated within the resin matrix.

The gases create small bubbles dispersed throughout the mixture of reactive resins, and these bubbles enlarge, fed by additional gas formed during the reaction. The foam, by expanding, comes into contact with and adheres to the sheet material (which forms the upper covering and protective layer 4 of the panel 2) conveyed by the upper conveyor 6 and, by polymerising, forms the intermediate layer 3 of the panel 2. As mentioned, the upper sheet material moves parallel to the lower sheet material and remains spaced while in contact with the second conveyor belt (upper), pushed by the pressure exerted by the foam of the intermediate layer 3.

The two conveyor belts run along their respective longitudinal sliding tracks 24, 25, which counteract the pressure of the foam and keep the sheet materials intended to form the external surfaces 4, 5 of the panel 2 in the correct position.

A single continuous panel 2 is thus progressively obtained, conveyed along an advancement direction X and kept in shape by the two recirculating loop conveyor belts that drag and contain it during the expansion and polymerisation of the foam.

Each conveyor 6, 7 comprises, in particular, lateral containment means configured to contain and laterally delimit the mixture of reactive resins to define the width of the intermediate layer 3 (taken in a horizontal transverse direction with respect to the conveying direction X). Such lateral containment means may be provided on one or both conveyor belts. In particular, in one illustrated embodiment of the foaming apparatus (Figure 5), for lateral containment of the expanding foam, the individual plates or slats of the lower conveyor belt may be provided with vertical projections 71 configured to contain the lateral expansion of the foam.

In a further non-illustrated embodiment of the foaming apparatus, two additional lateral conveyor belts may be provided, circulating in a horizontal plane. In this further embodiment of the foaming apparatus, the lateral conveyor belts may be provided with profiles (for example made of plastic) having shapes suitable for coupling with longitudinal profiling ribs of one or both sheet materials (for example of a metal sheet covering rigid panels 2).

As mentioned, in one embodiment of the foaming apparatus 1 (Figure 15), the differentiated spacing along the advancement direction X is obtained by elastic deformation in bending and/or shear of the first upper portion 15 with respect to the first lower portion 16. In this embodiment, the geometry variator means comprise one or more structural lightening zones W for bending and/or shear in the upper modular trunks 8a, 8b, 8c, ..., 8n. The structural lightening zones W are configured to confer increased bending and/or shear deformability on the first upper portion 15 and reduced bending resistance. The structural lightening zones W are distributed in the upper modular trunks 8a, 8b, 8c, ..., 8n along the advancement direction X.

In this embodiment, the structural lightening zones W comprise one or more windows obtained in the pair of side walls 20a, 21a, ..., 20n, 21n of one or more upper trunks 8a, 8b, 8c, ..., 8n. Said windows may be rectangular and obtained in the web of the upper support and guide frame 8 to increase flexibility in the vertical-longitudinal plane of the structures themselves. The dimensions of the rectangular windows may vary as a function of the total height H of the upper support and guide frame itself. For example, the height L of the window may vary according to the formula: 0.2H ≤ L ≤ 0.9H. The length of the window may vary according to the formula: 0.8H ≤ L ≤ 2.5H. In the web of each wall 20a, 21a of one or more upper trunks 8a, 8b, 8c, ..., 8n in the first conveying zone C, from one to four windows may be provided; in particular, two windows may be provided. In the illustrated embodiment, the rectangular window has rounded corners to reduce the notch effect.

Furthermore, the minimum distance from the joining points of the joining flanges of the upper trunks 8a, 8b, 8c, ..., 8n to the vertical wall closest to the window may be half the height of the window; similarly, the minimum distance between the vertical parts of the windows may be calculated.

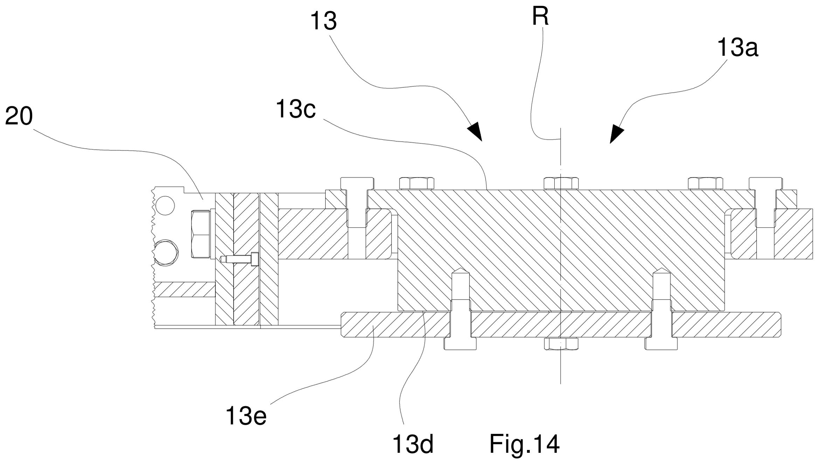

As mentioned, in other embodiments, the geometry variator means comprise joint means 13, 26, 26', 26", 26"', 30, 31, 31' (Figures 6, 13, 14, 16-30). In these embodiments, the differentiated spacing along the advancement direction X is defined by joint means 13, 26, 26', 26", 26‴, 30, 31, 31' configured to mutually connect the upper modular trunks 8a, 8b, 8c, ..., 8n and allow-by elastic deformation of the joint means or by relative rotation between adjacent upper modular trunks 8a, 8b, 8c, ..., 8n-a corresponding tilt of the upper modular trunks 8a, 8b, 8c, ..., 8n to define the longitudinally differentiated spacing.

In the illustrated embodiments, the joint means 13, 26, 26', 26", 26"', 30 are provided between adjacent side walls 20a, 20b, ..., 20n of distinct and adjacent upper modular trunks 8a, 8b along the advancement direction X, in particular, the joint means are provided at the joining ends of the adjacent side walls 20a, 20b, ..., 20n of upper modular trunks (for example between upper modular trunks 8a, 8b).

In one illustrated embodiment (Figures 6, 13, 14, 20, 21-23), the joint means comprise hinge means 13 configured, in particular, to allow a relative rotation of the upper trunks 8a, 8b, 8c, ..., 8n around respective horizontal rotation axes R that are orthogonal to the advancement direction X.

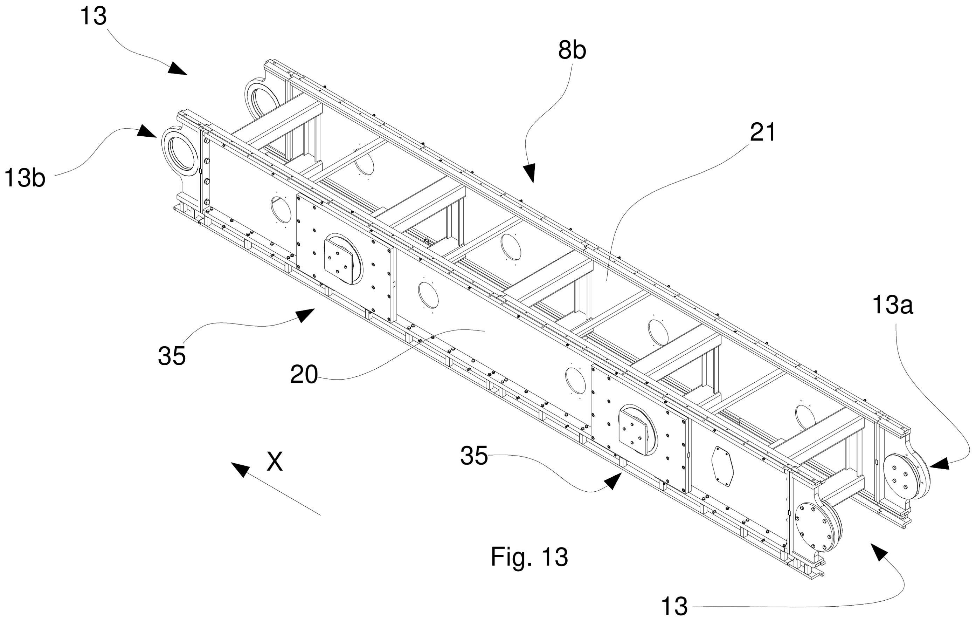

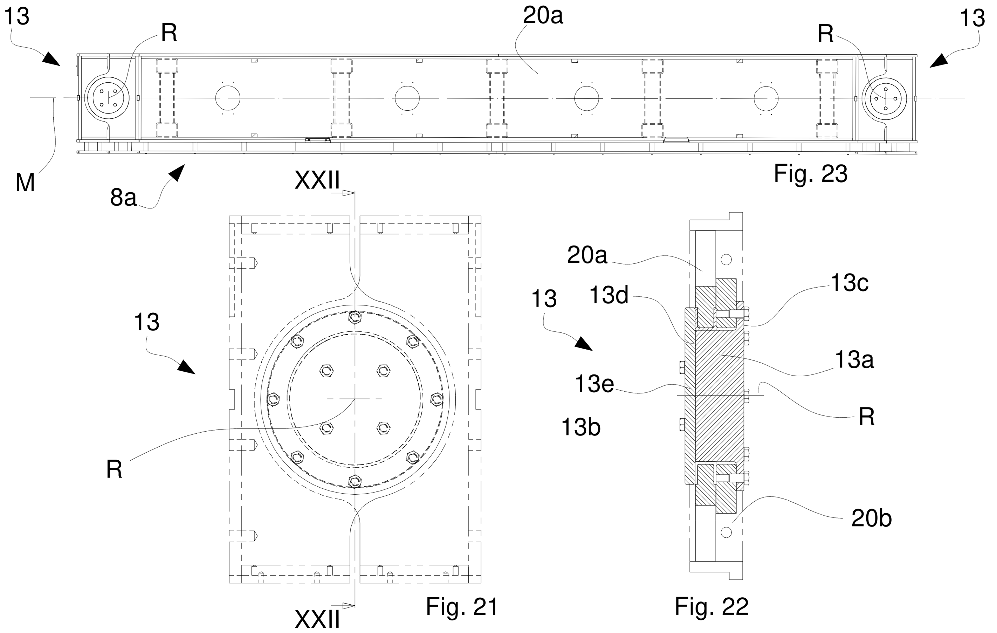

In this embodiment, the hinge means 13 comprise hole means 13b provided on one or both end portions of an upper trunk 8a and respective pin means 13a provided on an end portion of the adjacent upper trunk 8b (Figures 13 and 22). The hole means 13b comprise a bushing, or a sleeve, or a perforated plate. The pin means 13a comprise, at a first end 13c, an enlarged head portion intended to be fixed to the respective upper modular trunk 8a and, at another opposite end 13d, an anti-sliding plate 13e arranged to prevent the reciprocal uncoupling of the two upper trunks 8a, 8b.

In particular, provision is made to apply to the upper trunks 8a, 8b, 8c, ..., 8n at only one end (for example of the upper trunk 8a since it comprises the curved head) or at both ends (for example the upper trunks indicated as 8b, 8c, Figures 13 and 23) by welding or bolting the pin means 13a and hole means 13b. The hinge means 13 may be provided with a bush part or a coating to facilitate the rotational movement.

In addition or alternatively to the hinge means 13, in further illustrated embodiments, the joint means comprise elastically yielding joining means 26, 26', 26", 26"', 30, 31, 32, 31', 32' arranged to elastically connect the upper modular trunks 8a, 8b, 8c, ..., 8n to allow a variation of the joining angle between the upper modular trunks 8a, 8b, 8c, ..., 8n by concentrated bending in an interface and connection zone between adjacent upper modular trunks 8a, 8b, 8c, ..., 8n, in particular at the joining ends of the walls of the upper modular trunks 8a, 8b, 8c, ..., 8n. The elastically yielding joining means 26, 26', 26", 26"', 30, 31, 32, 31', 32' are configured to have longitudinal deformability (in the elastic field) and relatively high vertical stiffness.

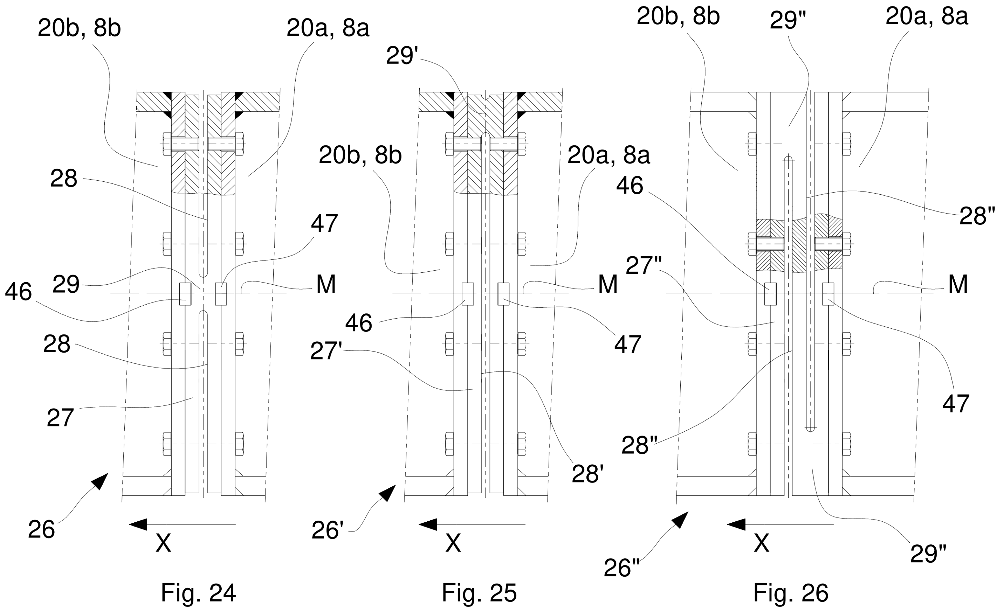

In some illustrated embodiments (Figures 24-28), the elastically yielding joining means 26, 26', 26", 26‴ comprise at least one interface and connection element 27, 27', 27", 27"' shaped to be interposed between contiguous end portions of adjacent upper modular trunks 8a, 8b and fixed to the latter.

Said contiguous end portions may be provided with respective flanges; the interface and connection element 27, 27', 27", 27‴ may be stably connected, for example by welding or by screw means, to said flanges.

In these embodiments, between the contiguous end portions of adjacent upper trunks 8a, 8b, a pair of vertical constraint elements 46, 47 is provided, each of which can be positioned between the interface element and a respective end portion.

In the embodiments illustrated in Figures 24-28, the interface and connection element 27, 27', 27", 27‴ is provided with one or more notch-shaped zones 28, 28', 28", 28"' shaped to confer elastic yieldability in bending and high shear stiffness on the interface and connection element 27, 27', 27", 27"'.

The interface element comprises, in particular, a plate-shaped element 27, 27', 27", 27"' (Figures 24-28) extending substantially along the entire height of the flanged ends of the upper modular trunks 8a, 8b, 8c, ..., 8n on a plane orthogonal to the axes of longitudinal extent M of the upper modular trunks 8a, 8b, 8c, ..., 8n. The plate-shaped element 27, 27', 27", 27‴ is provided with connecting faces for the respective upper modular trunks. The one or more notch-shaped zones 28, 28', 28", 28‴ define respectively one or more separating gaps that extend parallel to said orthogonal plane.

The plate-shaped element 27, 27', 27", 27"' defines at least one material continuity portion or bridge portion 29, 29', 29", 29"'. Each material continuity portion 29, 29', 29", 29"' is delimited by at least one curved surface (that is, by at least one surface with rounded connections).

The material continuity portion 29, 29', 29", 29"' defines the flexible deformable section. The material continuity portion 29, 29', 29", 29"' may be dimensioned so as to allow a tilt of the respective upper trunk of 20/4000 with a combined stress state of shear and bending and with a stress not less than 160 N/mm², that is, 160 MPa.

In one illustrated embodiment (Figure 24), two notch-shaped zones 28 are provided that define two coplanar separating gaps. Said coplanar separating gaps extend from a central zone of the plate-shaped element 27 in opposite directions towards a lower end and towards an upper end of the plate-shaped element 27. The coplanar separating gaps leave defined in the central zone of the plate-shaped element 27 a material continuity portion 29.

In a non-illustrated embodiment, the material continuity portion 29 may be defined in an intermediate zone of the plate-shaped element 27 different from the central zone.

In one illustrated embodiment (Figure 25), a single notch-shaped zone 28' is provided that defines a separating gap extending for a fraction of the height of the upper modular trunks 8a, 8b, 8c, ..., 8n towards a lower end of the plate-shaped element 27' and leaving defined in an upper zone of the plate-shaped element 27' a material continuity portion 29'.

In a non-illustrated embodiment, a single separating gap may be provided, extending for a fraction of the height of the upper modular trunks 8a, 8b, 8c, ..., 8n towards an upper end of the plate-shaped element and leaving defined in a lower zone of the plate-shaped element a material continuity portion.

In one embodiment (Figure 26), several notch-shaped zones 28" are provided that define a plurality of separating gaps extending on respective planes parallel to the orthogonal plane for a fraction of the height of the upper modular trunks 8a, 8b, 8c, ..., 8n. The notch-shaped zones 28" define respective material continuity portions 29" placed at ends that are mutually opposite with respect to a central zone of the plate-shaped element 27".

In the embodiments described so far (Figures 24, 25 and 26), the separating gap(s) pass through the plate-shaped element 27, 27', 27" in a direction transverse to the development axis of the upper trunks which defines the width of the plate-shaped element 27, 27', 27".

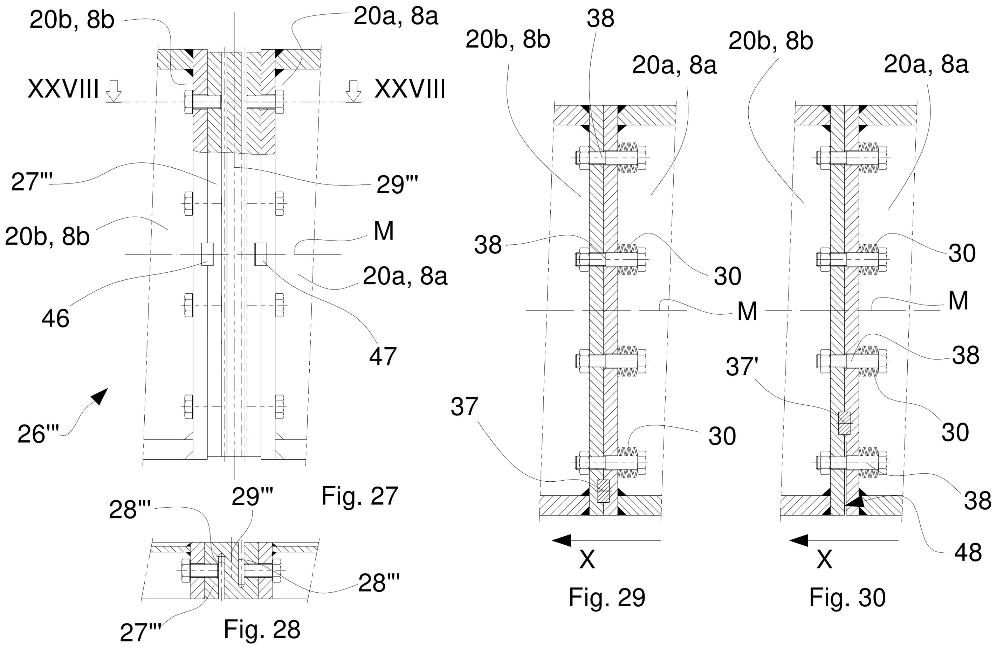

In a further embodiment (Figures 27 and 28), several notch-shaped zones 28‴ are provided that define a plurality of separating gaps extending on respective planes parallel to the orthogonal plane over the entire height of the plate-shaped element 27‴. The notch-shaped zones 28‴ also define respective material continuity portions 29‴ that extend over the entire height and are placed at ends that are mutually opposite with respect to a central zone of the plate-shaped element 27"' (Figure 28).

In this embodiment, the separating gaps do not pass through the plate-shaped element 27, 27', 27" in a direction transverse to the development axis of the upper trunks, which defines the width of the plate-shaped element 27, 27', 27" (Figure 28).

In the illustrated embodiments, the thickness of the plate-shaped element 27, 27', 27", 27"' is greater than that of the web of the side wall 20a, 20b of the respective upper trunk 8a, 8b.

In the illustrated embodiments, the width of the plate-shaped element 27, 27', 27", 27"' is at least three times that of the web of the side wall 20a, 20b of the respective upper trunk 8a, 8b.

In the illustrated embodiments, the curved surface that at least partly delimits the material continuity portion 29, 29', 29", 29"' has a radius that is at least half the width of the separating gap.

In the illustrated embodiments, the height of the material continuity portion 29, 29', 29", 29"' can be at least three times the width of the plate-shaped element 27, 27', 27", 27"'.

Alternatively, or in addition, to the elastically yielding joining means described in which the interface and connection element is present (Figures 24-28), longitudinal mechanical fixing members 38 (Figures 29 and 30) and a connecting key 37, 37' may be provided, arranged to mutually connect at least two adjacent upper modular trunks 8a, 8b. In these embodiments (Figures 29 and 30), the elastically yielding joining means comprise, in particular, a plurality of spring elements 30 cooperating with the longitudinal mechanical fixing members 38 and with the connecting key 37, 37' to exert a mutual connection action between two adjacent upper modular trunks 8a, 8b. The longitudinal fixing members 38 may comprise pin fixing elements, in the illustrated embodiments, connecting bolts are provided. Said plurality of spring elements 30 is configured, in particular, to exert between the two aforesaid adjacent upper modular trunks 8a, 8b a clamping force having a component parallel to the advancement direction X. At the same time, the plurality of spring elements 30 is configured to yield elastically so as to permit a relative rotation of one upper modular trunk 8a with respect to another upper modular trunk 8b. In the illustrated embodiments (Figures 29 and 30), the spring elements 30 comprise preloaded cup springs. The spring elements 30 may be distributed on a plane orthogonal to the axes of longitudinal extent M of the upper modular trunks 8a, 8b, 8c, ..., 8n.

In said illustrated embodiments (Figures 29 and 30), the connecting key 37, 37' may be provided between the two adjacent end portions (flanges) of the adjacent upper modular trunks 8a, 8b. The connecting key 37, 37' may be positioned at any height with respect to the plane on which the axes of longitudinal extent M lie.

In one illustrated embodiment (Figure 29), the connecting key 37 is positioned in a lower end zone of the flanges.

In a further illustrated embodiment (Figure 30), the connecting key 37' is positioned in an intermediate zone of the flanges. In this further illustrated embodiment, the lower flange surfaces are mutually spaced along a direction parallel to the axes of longitudinal extent M (in a rest position in which the adjacent upper modular trunks 8a, 8b are not mutually rotated/tilted). In this further illustrated embodiment, in one of the flanges a seat 48 is obtained, shaped so that the lower flange surfaces are parallel to one another (and orthogonal to the axes of longitudinal extent M). In a non-illustrated embodiment, provision may be made for lower flange surfaces to be mutually inclined according to opposite slopes so as to form an angle allowing the reciprocal rotation/tilt of the two adjacent upper modular trunks 8a, 8b.

During operation, when two adjacent upper modular trunks 8a, 8b are mutually rotated/tilted, the springs (applied to the respective bolts) are compressed and the bolts slide within their housing holes.

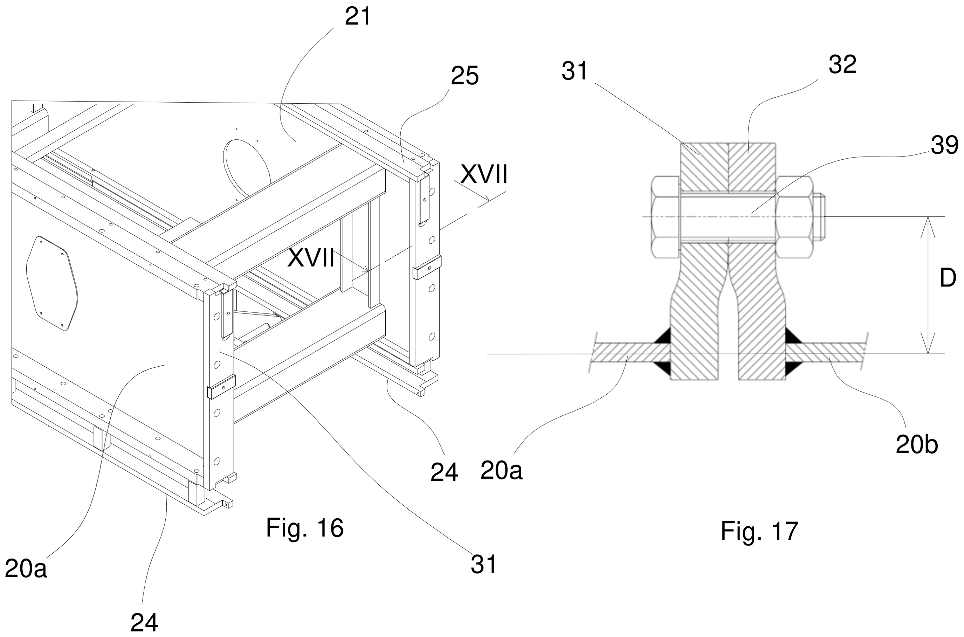

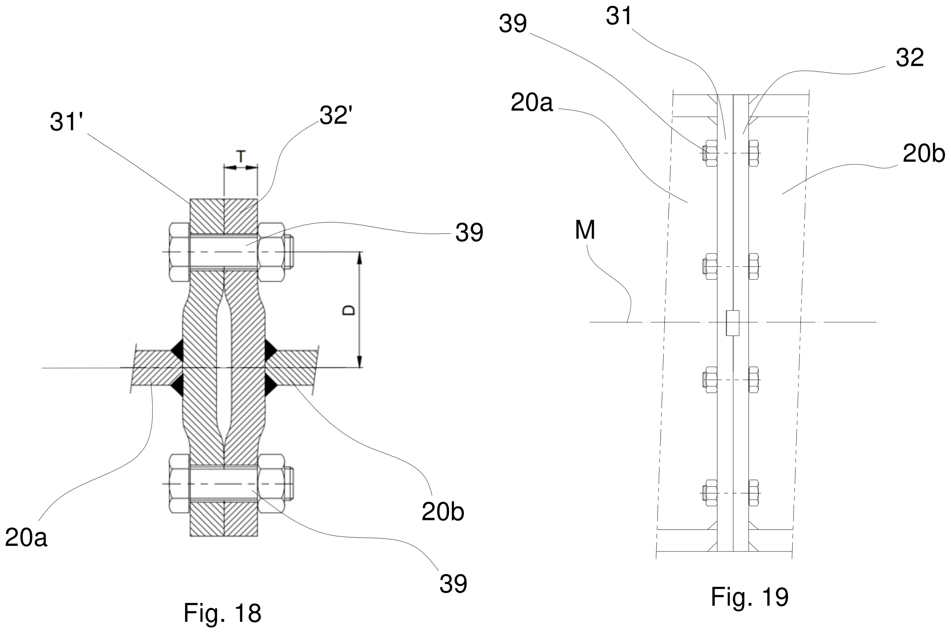

Alternatively, or in addition to the elastically yielding joining means in which the interface element is present (Figures 24-28) and/or to the elastically yielding joining means with the plurality of spring elements, the elastically yielding joining means may comprise a pair of flange elements 31, 32, 31', 32' (Figures 16, 17, 18 and 19) protruding transversely from the respective side walls 20a, 20b, ..., 20n of the two upper modular trunks 8a, 8b. Said flange elements 31, 32, 31', 32' are clamped together by further longitudinal mechanical fixing members 39, which are arranged at a certain arm distance D from the respective side walls 20a, 20b, ..., 20n, in particular from a median plane of the respective webs of the upper trunks 8a, 8b. The arm distance D may be measured in a horizontally transverse direction (in particular perpendicular) with respect to the direction of longitudinal extent M of the upper modular trunks 8a, 8b (Figures 17 and 18).

In one illustrated embodiment (Figure 17), the flange elements 31, 32 protrude from a single face of the respective side walls 20a, 20b, ..., 20n (or equivalently from the respective webs). In this illustrated embodiment, the flange elements 31, 32 protrude towards the inside of the upper modular trunks 8a, 8b, that is, towards the axes of longitudinal extent M of said upper modular trunks. In a non-illustrated embodiment, the flange elements 31, 32 protrude towards the outside of the upper modular trunks 8a, 8b. In this illustrated embodiment, the flange elements 31, 32 are welded onto the web of the respective side walls 20a, 20b, ..., 20n.

In an alternative illustrated embodiment (Figure 18), the flange elements 31', 32' protrude bilaterally from opposite faces of the respective side walls 20a, 20b, ..., 20n, in particular from a median plane of the respective webs of the upper trunks 8a, 8b, so as to be geometrically symmetrical with respect to the side walls 20a, 20b, ..., 20n; this allows the elastically yielding joining means, as provided in this alternative embodiment, to guide the rotation of one upper modular trunk 8a with respect to another upper modular trunk 8b in a balanced manner.

As mentioned, the configuration of the frame-support structures 19 allows parallel lifting of the entire upper support and guide frame 8 and thus of the upper conveyor 6, keeping the latter longitudinally parallel to the lower conveyor 7.

In the illustrated embodiments, the constraint support and position variation actuator means 33, 36 comprise, for a respective pair of constraint elements 35, a pair of lifting and support devices 33 configured to adjust the longitudinally uniform spacing between the upper conveyor 6 and the lower conveyor 7 and a corresponding pair of differentiated actuating devices 36 configured to define the longitudinally differentiated spacing between the first upper portion 15 and the first lower portion 16. The pair of differentiated actuating devices 36 is mounted on at least one of the frame-support structures 19 located in the first conveying zone C.

The constraint support and position variation actuator means 33, 36 comprise, for each constraint element 35, a respective sliding hinge connecting unit 34, 35, 34' arranged to connect-at the respective constraint element 35-a portion of upper modular trunk 8a, 8b, 8c to the respective frame-support structure 19, allowing a relative rotation and a relative sliding of the constraint element 35 and thus a corresponding rotation and a corresponding longitudinal sliding of the upper modular trunk 8a, 8b, 8c.

The sliding hinge connecting units 34, 35, 34' are configured, in particular, to allow the upper trunk 8a, 8b, 8c to rotate and translate along an axis of longitudinal extent M of the upper modular trunk 8a, 8b, 8c.

In the illustrated embodiments, the pair of lifting and support devices 33 comprises a vertical screw part 53 that can be driven in a synchronised manner-by motorised synchronisation bars 43 (with further screw elements provided in all the frame-support structures 19)-to raise and evenly space the constraint elements 35 and thus the upper support and guide frame 8 with respect to the lower support and guide frame 9 to adjust the uniform spacing.

In the illustrated embodiments, the frame-support structure 19 comprises at least one vertical guide for a respective upper portion 33a that supports the respective sliding hinge connecting unit 34, 35, 34', and the pair of differentiated actuating devices 36 comprises at least one motorised screw nut part 56 connected to the upper portion 33a. The screw nut part 56 is configured, in particular, to engage with the respective screw part 53 and with the vertically guided upper portion 33a. The motorised screw nut part 56 can be driven in a controlled manner to vary the height of the respective upper portion 33a (and thus the height of the sliding hinge connecting unit 34, 35, 34').

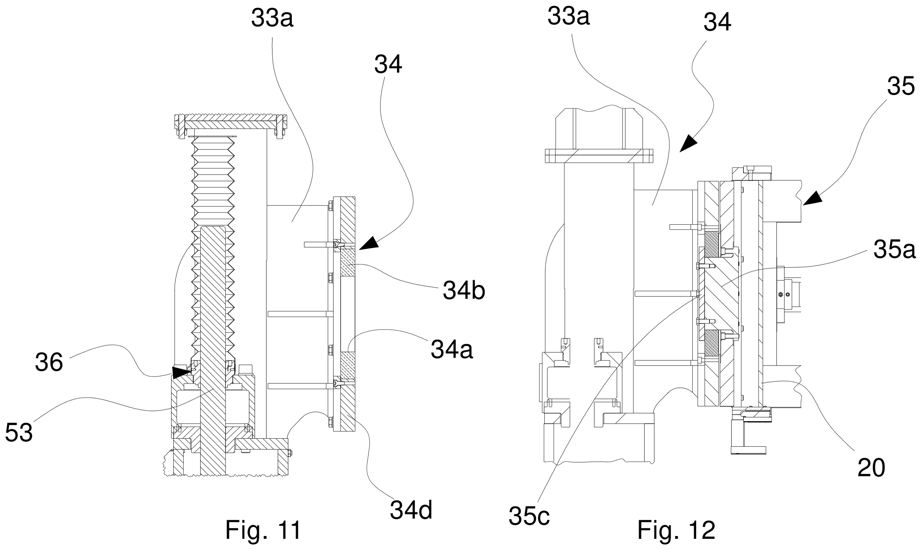

In other words, each upright 51, 52 of the frame-support structures 19 of the foaming apparatus 1 is provided with the screw part 53 (Figures 8 and 11) (of the jack type, that is, with trapezoidal threading) which extends along a vertical operating axis and is connected to an angular return mechanism 55 (suitable for redirecting the rotation of the synchronisation bar 43 by 90° with respect to the screw part 53). The synchronisation bar 43 horizontally connects the angular return mechanisms 55 to synchronise the screw actuators 53 of the respective frame-support structures 19. Therefore, rotation of the synchronisation bar 43 is suitable for controlling the synchronised rotation of all the screw parts 53. Each screw part 53 is associated with the respective screw nut part 56 laterally connected to the upper support and guide frame 8 by the upper portion 33a which is vertically guided.

In one embodiment, the sliding hinge connecting unit 34, 35 comprises, for each side wall 20a, 21a of the respective upper modular trunk 8a, a first connecting part 34 integral with the upper portion 33a (the upper portion 33a being vertically guided and slidable) and a second connecting part, or constraint element 35, mounted on the respective side wall 20a, 21a.

The sliding hinge connecting unit 34, 35, 34' is configured, in particular, to allow reciprocal rotation and translation between an upper modular trunk and the frame-support structure 19, rotating about an further axis (horizontal) perpendicular to the advancement direction X. In the illustrated embodiment in which rotatable joint means 13 are provided, the further rotation axis is parallel to the rotation axis R of the rotatable joint means 13.

In the illustrated embodiments, to perform the longitudinally differentiated positioning, the sliding hinge connecting unit 34, 35, 34' is vertically guided along the respective upright 51, 52 and is connected to the screw nut part 56. The screw nut part 56 is motorised and can be controlled to rotate around the screw part 53 to control and modify the position of the sliding hinge connecting unit 34, 35, 34' along the screw part 53 so as to perform an additional (differential) vertical movement of the respective sliding hinge connecting unit 34, 35, 34' to which the screw nut part 56 is constrained.

The sliding hinge connecting unit 34, 35, 34' is configured, in particular, to allow the upper trunk (to which the sliding hinge connecting unit 34, 35, 34' is constrained) also to translate along its own axis of longitudinal extent M.

In the illustrated embodiments, for each upper modular trunk 8a, 8b, 8c, ..., 8n located in the first conveying zone C, two frame-support structures 19 are provided, each carrying a pair of differentiated actuating devices 36.

In the illustrated embodiments, moreover, each upper modular trunk 8a, 8b, 8c, ..., 8n is coupled to the respective differentiated actuating devices 36 by at least one pair of sliding hinge connecting units 34, 35, 34', a pair of front sliding hinge connecting units and a pair of rear sliding hinge connecting units relative to the advancement direction X. Each pair of sliding hinge connecting units 34, 35, 34' is carried by a respective pair of differentiated actuating devices 36.

In the embodimentillustrated in Figure 8, the pair of differentiated actuating devices 36 is constrained (by vertical guides) to a base portion 33b fixed to the lower support and guide frame 9 and comprises the upper portion 33a, which is movable with respect to the base portion 33b and carries the sliding hinge connecting unit 34, 35, 34'. The base portion 33b and the upper portion 33a are coupled by the vertical guide (prismatic sliding connection), which allows guided movement of the upper portion 33a.

As mentioned, each lifting device 33 can vertically move the respective sliding hinge connecting unit 34, 35, 34' by rotation of the screw part 53 actuated by the angular return unit 55 controlled by the rotation (common to all lifting devices 33) of the transmission bar 43.

In the frame-support structures 19 located in the first conveying zone C, a differential linear actuator 57 is provided, suitable for engaging with the screw part 53 of the jack of the respective frame-support structure 19 so that a preset rotation of the screw nut part 56 corresponds to a vertical displacement (differential with respect to that obtained by rotation of the screw part 53) of the upper portion 33a and thus of the sliding hinge connecting unit 34, 35, 34'.

The linear actuator 57 may be of the electric type (for example a gear motor, as in the illustrated embodiment, or an electric motor) or fluid-dynamic (hydraulic or pneumatic).

In a non-illustrated embodiment, the constraint support and position variation actuator means 33, 36 may comprise hydraulic pistons controlled separately in position control.

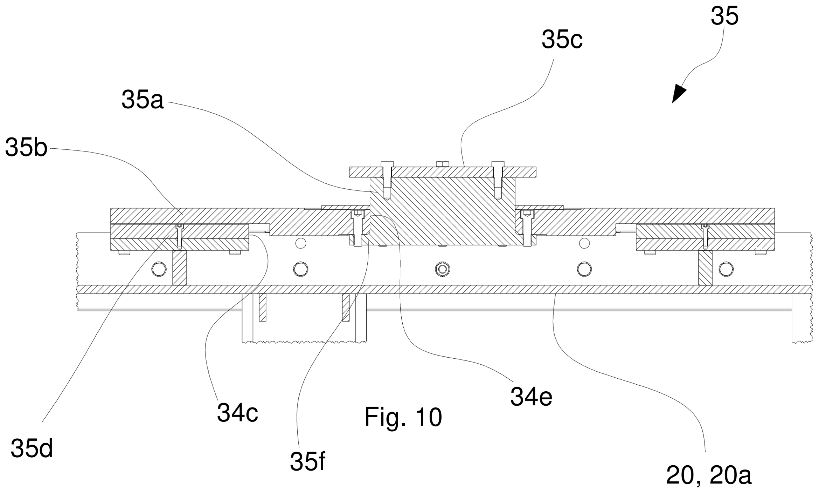

In one illustrated embodiment (Figures 7, 8, 10, 11 and 12), the sliding hinge connecting unit 34, 35 comprises a first plate-shaped body 34d (Figures 7, 8 and 11). The first plate-shaped body 34d is connected to the upper portion 33a (which is vertically slidable) and carries a fixed bushing 34b (in the form of a plate) defining a hole 34a (Figures 7 and 11). In this illustrated embodiment, the sliding hinge connecting unit 34, 35 comprises a second plate-shaped body 35b (Figure 10) carrying a pin part 35a arranged to interact with the hole 34a and a third plate-shaped body 35d connected laterally to an upper modular trunk 8a, 8b, 8c, ..., 8n. In this specific example, in the second plate-shaped body 35b a circular opening 34e (Figure 10) is defined, in which the pin part 35a is partially inserted. In the third plate-shaped body 35d a horizontal slot 34c is defined, arranged to interact with a portion of the second plate-shaped body 35b so as to allow its reciprocal sliding, delimited by opposite surfaces of the slot 34c along a longitudinal sliding direction (parallel to the axis of extent M, Figure 23) of the upper modular trunk on which the sliding hinge connecting unit 34, 35 is mounted. The first plate-shaped body 34d is integral with the upper portion 33a. The third plate-shaped body 35d is integral with the respective upper modular trunk 8a at one of its side walls 20, 20a (Figure 10).

Anti-sliding means 35c, 35f are provided at the opposite ends of the pin part 35a and configured to prevent its sliding. The pin part 35a is rotatably coupled to the hole 34a and is retained therein by plate-shaped anti-sliding means 35c. In this embodiment, flange-type anti-sliding means 35f are provided, configured for mounting the pin part 35a on the second plate-shaped body 35b.

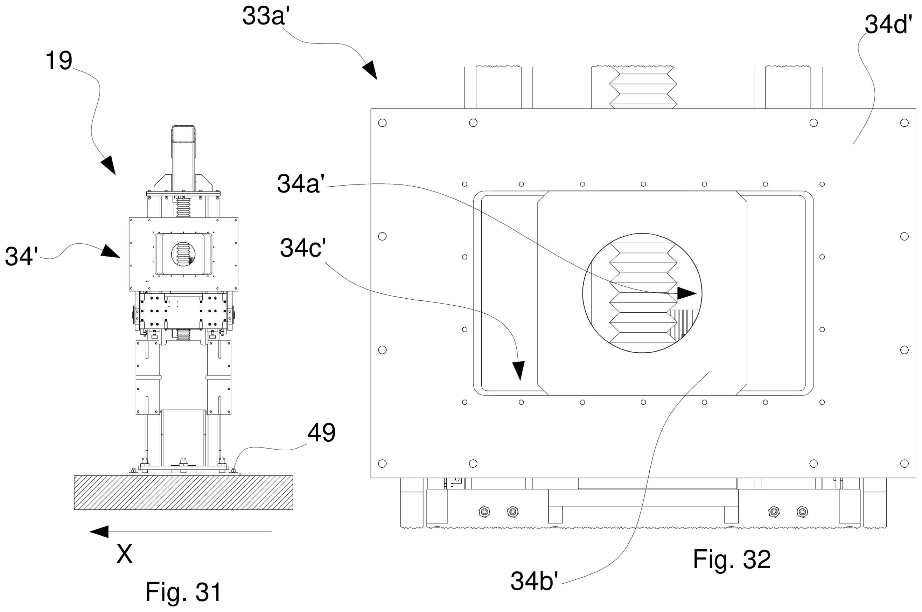

In a further illustrated embodiment (Figures 31 and 32), the sliding hinge connecting unit 34' comprises a fourth plate-shaped body 34d' having a further horizontal slot 34c' (rectangular in shape) in which a fifth plate-shaped body 34b' with a bushing is insertable, defining a further hole 34a' arranged to engage an further pin part (not shown, configured similarly to the pin part 35a illustrated) integral with the respective upper modular trunk 8a, 8b, 8c, ..., 8n to which the sliding hinge connecting unit 34' is connected, so that the latter can slide parallel to the advancement direction X. The fourth plate-shaped body 34d' is integral with the upper portion 33a'. The further slot 34c' is delimited by two opposite vertical walls that limit the sliding of the fifth plate-shaped body 34b'. In other words, in the further embodiment illustrated in Figures 31 and 32, the sliding hinge connecting unit 34' comprises a plate body 34b' slidable parallel to the axis of extent M (Figure 23), in which further hole means 34a' with a constraint function and further pin means (not illustrated) arranged to engage the further hole means 34a' and mountable in a fixed manner on the side walls 20a, 21a of the respective upper modular trunk 8a are obtained. Also in this example, the constraint element 35 provides anti-sliding means (similar to the anti-sliding plate 35c, Fig. 10) arranged to prevent reciprocal uncoupling between the further hole means 34a' and the further pin means.

The configuration of the constraint support and position variation actuator means 33, 36, in particular owing to the provision of sliding hinge connecting units 34, 35, 34', allows adaptation both to shortening-parallel to the advancement direction X-of the upper support and guide frame 8 and to rotation when a position of the first upper portion 15 different from an alignment or parallelism position with the first lower portion 16 is set, preventing undesired stress on the reciprocal constraints between the upper support and guide frame 8 and/or the frame-support structures 19.

In a further non-illustrated embodiment, stationary hole means may be provided on the modular trunk side 8a, 8b, 8c, ..., 8n and sliding pin means on the frame-support structure 19 side. In other words, the slidable plate body 34d' may carry a pin, and a corresponding hole may be obtained on the respective side wall of the modular trunk.

In a further non-illustrated embodiment, sliding hole means may be provided on the modular trunk side 8a, 8b, 8c, ..., 8n along the axis of extent M and (horizontally) stationary pin means on the frame-support structure 19 side.

In the illustrated embodiments, the sliding tracks 24, 25 for the upper conveyor belt 6 are connected to the upper support and guide frame 8. In these embodiments, the sliding tracks 24, 25 are defined by contiguous track segments 41, 42, 41', 42'. Adjacent ends of the contiguous track segments 41, 42, 41', 42' are reciprocally movable to permit relative movement between two adjacent upper modular trunks 8a, 8b (Figures 5A and 5B).

In a non-illustrated embodiment of the foaming apparatus, the sliding tracks 24, 25 for the upper conveyor belt 6 are connected to the upper support and guide frame 8. In this embodiment, the geometry variator means comprise one or more spacing elements arranged to space in a differentiated manner and adjust the position of the sliding tracks with respect to the upper support and guide frame 8 so as to vary, by the sole inclination of the guides, the inclination of the branch of the conveyor belt that faces the foaming gap 10.

The behaviour of the foam during the expansion phase is described below.

The dispensing means 11 pour a layer of mixture of reactive resins onto the lower sheet material that slides beneath them and constitutes the lower covering and protective layer 5 of the panel 2.

Above the dispensing means 11, a further sheet material is fed inclined or conveyed by a roller (Figure 5) until it comes into contact with the upper conveyor belt.

Since the lower sheet substrate slides beneath the dispensers of the mixture of reactive resins, they are configured to distribute the resins in parallel flows and in an almost homogeneous quantity, therefore, said layer of mixture of reactive resins is distributed over the width of the sheet material in an almost homogeneous manner. The resins, immediately after touching the surface-which is heated-begin to form foam that expands according to a preferential expansion direction that is transverse, in particular vertical, with respect to the sheet material forming the lower substrate 5.

The foam expands on the surface of the lower sheet material and is dragged by the movement of the sheet material along the advancement direction X towards the inlet end 17 of the upper and lower conveyors 6, 7, in particular in a zone where the upper sheet material comes into contact with the end curved head of the upper conveyor 6.

As mentioned, before coming into contact with the upper sheet material, the foam tends to expand in three directions, with a preferential expansion direction that is substantially vertical. From the midline of the panel 2 being formed to near its lateral edges, sliding is hindered by the presence of other foam, and only relatively limited sliding occurs laterally towards the edges. Such sliding can be counteracted by the lateral containment means 71.

In the preferential expansion direction, rapid expansion occurs (just a few seconds after deposition on the sheet material of the lower substrate 5) due to the combined action of the heat transmitted by the sheet material and the heat developed by the chemical reaction, and the expanding foam reaches the inner surface of the upper sheet at the inlet end 17 where the two sheet materials converge.

A method for continuous process foaming of a panel 2, of the type comprising an intermediate layer of expanded material 3 externally covered by upper and lower covering and protective layers 4, 5, is described below.

The method for continuous process foaming of a panel 2 comprises the steps of:
- providing an upper conveyor 6 and a lower conveyor 7 extending longitudinally from an inlet end 17 to an outlet end 18,
- advancing, along an advancement direction X, through the upper conveyor 6 and said lower conveyor 7, a pair of sheet materials intended to generate continuously respectively the covering and protective layers 4, 5,
- providing a first conveying zone C extending from the inlet end 17 and defined by a first upper portion 15 of the upper conveyor 6 and by a first lower portion 16 of the lower conveyor 7 with respect to the advancement direction X,
- providing a dispensing zone 12 upstream of the inlet end 17 and leading to the first conveying zone C and arranging dispensing means 11 in the dispensing zone 12,
- making the pair of sheet materials intended to generate respectively the covering and protective layers 4, 5 converge towards the inlet end 17,
- adjusting a longitudinally uniform spacing, along the advancement direction X, between the upper conveyor 6 and the lower conveyor 7 to define a foaming gap 10 corresponding to a desired outlet thickness S for the panel 2.

The method further comprises a step of configuring an upper support and guide frame 8 and a lower support and guide frame 9 so as to create a modular structure composed of a plurality of trunks mutually joined at their ends.

The method further comprises a step of varying in a desired manner by geometry variator means the reciprocal distance between the first upper portion 15 and the first lower portion 16 - progressively differentiating said distance along the advancement direction X - so as to modify the geometric configuration of the first conveying zone C and define a foaming gap 10 of longitudinally differentiated thickness, in particular increasing, along the advancement direction X between the first upper portion 15 and the first lower portion 16 to guide and facilitate the expansion of the foam generated by said mixture of reactive resins, so as to minimise the amount of expanding agent required and optimise the cellulation of the foam.

The step of setting and differentiating in a desired manner, by geometry variator means, the reciprocal position between the first upper portion 15 and the first lower portion 16 comprises, in particular, a step of conferring on the foaming gap 10 in the first conveying zone C a longitudinally divergent shape with an increasing transit section along the advancement direction X.

Alternatively, or in addition, the step of setting and differentiating in a desired manner, by geometry variator means, the reciprocal position between the first upper portion 15 and the first lower portion 16 is achieved by elastic deformation in bending and shear of at least one of the upper modular trunks 8a, 8b, 8c, ..., 8n of the first upper portion 15 of the upper conveyor 6.

The step of setting and differentiating in a desired manner, by geometry variator means, the reciprocal position between the first upper portion 15 and the first lower portion 16 is achieved by rotating at least one of the upper modular trunks 8a, 8b, 8c, ..., 8n forming the first upper portion 15 with respect to the first lower portion 16.

The geometry variator means provided in the illustrated embodiments allow variation of the geometric configuration of the foaming gap 10 in the first conveying zone C by tilting one or more upper trunks 8a, 8b, 8c, ..., 8n of the upper support and guide frame 8.

In a non-illustrated embodiment, provision may be made for the upper support and guide frame 8 to be kept parallel to the lower support and guide frame 9 along its entire length (as in the prior art), and geometry variator means may be provided configured to set in a desired manner, in the first conveying zone C, the reciprocal position between the sliding tracks 24, 25 provided on the underside of the upper conveyor 6 and the sliding tracks 24, 25 provided on the upper side of the lower conveyor 7 so as to vary the geometric configuration of the foaming gap 10 in the first conveying zone C. In this non-illustrated embodiment, the geometry variator means may comprise a plurality of spacing elements mounted on the upper support and guide frame 8 (or on the lower support and guide frame 9) that are controllably adjustable so as to tilt only the sliding tracks 24, 25 located in the first conveying zone C, leaving unchanged (and parallel) the sliding tracks that define the outlet thickness S of the panel 2. In other words, in this non-illustrated embodiment, the geometry variator means comprise one or more spacing elements arranged to support and adjust the position of the lower sliding tracks 24, 25 with respect to the upper support and guide frame 8 so as to vary the inclination of the branch of the conveyor belt that faces the foaming gap 10.

The configuration of the geometry variator means which is such as to guide in a controlled manner the expansion of the foam generated by the mixture of reactive resins also allows a more homogeneous foam cellulation with lower average density and a smaller crust thickness contacting with the material of the sheet surfaces compared to a panel 2 formed by a foaming apparatus of the prior art.

The guiding action provided by the geometry variator means facilitates the expansion of the foam along the advancement direction by reducing the opposing action to expansion exerted by the presence of foam in formation at a more advanced expansion state (thus having greater thickness and greater viscosity).

The configuration of the geometry variator means, in particular owing to the possibility of providing, in a controlled manner, a longitudinally divergent development of the foaming gap 10 in the first conveying zone C, allows a saving of from 2% to 20% of expanding agent compared to the amount used for expansion in a foaming apparatus of the prior art.

The provision of a divergent section of the foaming gap 10 in the first conveying zone C promotes the final vertical expansion of the foam by reducing the backward thrust of the expansion wave front and the formation of crust.

The definition of a differentiated spacing, in the first conveying zone C, between the first upper portion 15 and the first lower portion 16, allows saving a significant amount of expanding agent, obtaining foam with homogeneous cellulation characteristics and with reduced crust thickness, while at the same time maintaining the mechanical and insulation characteristics of the formed panel 2 equal to those obtained with a foaming apparatus of the prior art in which a greater amount of expanding agent has been used.

Furthermore, the particular configuration of the geometry variator means, such as to confer on the foaming gap 10 in the first conveying zone C a longitudinally divergent shape with an increasing transit section along the advancement direction X, has a further advantage of reducing the crust thickness of the foam at the interface zones between the intermediate layer 3 and the upper layer 4 of the panel 2.

The configuration of the geometry variator means, by guiding the expansion of the foam along the advancement direction X and thus slowing the increase of the thrust of the expanding foam against the surface of the upper substrate, reduces internal convolutive movements of the wave front, thereby favouring homogeneous cell formation without the need to increase the amount of expanding agent.

In light of the above description, it is therefore evident that the apparatus and method according to the invention successfully achieve all the intended objects.

## Claims

1. Apparatus (1) for continuous process foaming of a panel (2), of the type comprising an intermediate layer of expanded material (3) covered externally by covering and protective layers (4, 5), comprising:
- an upper conveyor (6) comprising a first loop conveyor belt supported by a respective upper support and guide frame (8) and a lower conveyor (7) comprising a second loop conveyor belt supported by a respective lower support and guide frame (9), said upper conveyor (6) and lower conveyor (7) extending longitudinally from an inlet end (17) to an outlet end (18) and arranged for conveying respective sheet materials intended to generate respectively said covering and protective layers (4, 5) along an advancement direction (X) to said outlet end (18), wherein said upper support and guide frame (8) comprises several upper modular trunks (8a, 8b, 8c, ..., 8n) that are connected together by joining elements,
- frame-support structures (19) arranged for constraining and supporting said upper support and guide frame (8) and said lower support and guide frame (9) and configured to set longitudinally uniform spacing, along said advancement direction (X), between said upper conveyor (6) and said lower conveyor (7) to define a foaming gap (10) corresponding to a desired outlet thickness (S) for said panel (2),
- a first conveying zone (C) that extends from said inlet end (17) and is defined by a first upper portion (15) of said upper conveyor (6) and by a lower first portion (16) of said lower conveyor (7), wherein said first upper portion (15) is defined by said upper modular trunks (8a, 8b, 8c, ..., 8n), wherein said first lower portion (16) is defined by several lower modular trunks of said lower conveyor (7), and wherein said upper modular trunks (8a, 8b, 8c, ..., 8n) and said lower modular trunks are supported by said frame-support structures (19),
- a dispensing zone (12) upstream of said inlet end (17) in which a pair of said sheet materials converges,
- dispensing means (11) arranged in said dispensing zone (12) to dispense continuously, on a sheet material intended to generate said lower covering and protective layer (4), a mixture of reactive resins intended to generate said intermediate layer (3) of expanded material between said sheet materials,
- geometry variator means configured to vary in a desired manner the mutual position between said first upper portion (15) and said first lower portion (16) so as to modify the geometric configuration of the foaming gap (10) in said first conveying zone (C) and define a longitudinally differentiated spacing along said advancement direction (X) between said first upper portion (15) and said first lower portion (16) to guide and facilitate the expansion of the foam generated by said mixture of reactive resins, so as to reduce and minimize the quantity of expanding agent required and optimize cellulation of said foam.

2. Apparatus (1) according to claim 1, wherein said differentiated spacing along said advancement direction (X) is obtained by bending and shear elastic deformation of said first upper portion (15) with respect to said first lower portion (16).

3. Apparatus (1) according to any one of the preceding claims, wherein said geometry variator means comprise constraint support and position variation actuator means (33, 36) fitted to said frame-support structures (19) and configured to support said upper modular trunks (8a, 8b, 8c, ..., 8n) at respective constraint elements (35) and perform differentiated positioning of said constraint elements (35) so as to adjust a position of at least one of said upper trunks (8a, 8b, 8c, ..., 8n) with respect to the lower conveyor (7).

4. Apparatus (1) according to any one of the preceding claims, wherein said geometry variator means are configured to position according to a desired tilt at least one of said upper trunks (8a, 8b, 8c, ..., 8n) of the upper conveyor (6) with respect to said lower conveyor (7).

5. Apparatus (1) according to any one of the preceding claims, wherein said geometry variator means are settable to confer on said foaming gap (10) in said first conveying zone (C) a longitudinally divergent shape with an increasing transit section along said advancement direction (X).

6. Apparatus (1) according to one of claims 1 to 5, wherein said geometry variator means comprise joint means (13; 26; 26'; 26"; 26"'; 30; 31, 32; 31', 32') configured to mutually connect adjacent upper modular trunks (8a, 8b, 8c, ..., 8n), and enable - by elastic deformation of said joint means or by corresponding rotation between adjacent upper modular trunks (8a, 8b, 8c, ..., 8n) - a corresponding tilt of said upper modular trunks (8a, 8b, 8c, ..., 8n) to define said longitudinally differentiated spacing.

7. Apparatus (1) according to any one of the preceding claims, wherein said joint means comprise rotatable articulated joint means (13) configured to permit a corresponding rotation between said upper modular trunks (8a, 8b, 8c, ..., 8n) around respective horizontal rotation axes (R) that are orthogonal to said advancement direction (X).

8. Apparatus (1) according to any one of the preceding claims, wherein said joint means comprise elastically yielding joining means (26; 26'; 26"; 26"'; 30; 31, 32; 31', 32') arranged to connect, at respective joint ends, said upper modular trunks (8a, 8b, 8c, ..., 8n) to one another to allow a joint angle variation between said upper modular trunks (8a, 8b, 8c, ..., 8n) by elastic deformation in an interface and connection zone between said adjacent upper modular trunks (8a, 8b, 8c, ..., 8n).

9. Apparatus (1) according to claim 8, wherein said elastically yielding joining means (26; 26'; 26"; 26"'; 30; 31, 32; 31', 32') comprise a deformable joint that is fixable, in particular bolted or welded, between said respective joint ends of said upper modular trunks (8a, 8b, 8c, ..., 8n) in said interface and connection zone.

10. Apparatus (1) according to any one of the preceding claims, wherein said geometry variator means comprise one or more bending and/or shear structural lightening zones (W) in said upper modular trunks (8a, 8b, 8c, ..., 8n) configured to give an enhanced deformability by bending and/or shear on said first upper portion (15), said one or more structural lightening zones (W) being distributed in said upper modular trunks (8a, 8b, 8c, ..., 8n) along said advancement direction (X).

11. Apparatus (1) according to claim 6 or according to one of claims 7 to 10 as appended to claim 6, wherein each upper modular trunk (8a; 8b; 8c; ...; 8n) of said upper modular trunks (8a, 8b, 8c, ..., 8n) comprises a pair of support and guide side walls (20a, 21a) for said first loop conveyor belt, said end joint means (13; 26; 26'; 26"; 26‴; 30; 31, 32; 31', 32') being provided between adjacent side walls (20a, 20b; ...; 20n) of distinct adjacent upper modular trunks (8a, 8b, 8c, ..., 8n) along said advancement direction (X).

12. Apparatus (1) according to claim 10 or 11 as appended to claim 10, wherein said one or more bending and/or shear structural lightening zones (W) provide one or more windows (22) obtained in said at least one pair of side walls (20a, 21a).

13. Apparatus (1) according to claim 7 or according to one of claims 8 to 12 as appended to claim 7, wherein said rotatable articulated joint means (13) comprise hole means (13b) provided on one or both end portions of an upper modular trunk (8a) and pin means (13a) provided on an end portion of an adjacent upper modular trunk (8b).

14. Apparatus (1) according to claim 13, wherein said pin means (13a) comprises at a first end (13c) an enlarged head portion intended to be fixed to the respective upper modular trunk (8a) and at another end (13d) opposite a securing plate (13e) arranged for preventing the reciprocal uncoupling of the two upper modular trunks (8a, 8b, 8c, ..., 8n).

15. Apparatus (1) according to claim 9 or according to one of claims 10 to 15 as appended to claim 9, wherein said elastically yielding joining means (26; 26'; 26"; 26"') comprise at least one interface and connection element (27; 27'; 27"; 27‴) shaped to be interposed between and fixed to contiguous end portions of said adjacent upper modular trunks (8a, 8b, 8c, ..., 8n), said at least one interface and connection element (27; 27'; 27"; 27"') being provided with one or more notch-shaped zones (28; 28'; 28"; 28"') to confer bending elastic yieldability and great shear stiffness on said at least one interface and connection element (27; 27'; 27"; 27‴).

16. Apparatus (1) according to claim 15, wherein said interface and connection element comprises a plate-shaped element (27; 27'; 27"; 27"') extending substantially along the entire height of the upper modular trunks (8a, 8b, 8c, ..., 8n) on a plane that is orthogonal to the axes of longitudinal extent (M) of said upper modular trunks (8a, 8b, 8c, ..., 8n), said plate-shaped element (27; 27'; 27"; 27"') being provided with connecting faces for the respective upper modular trunks (8a, 8b, 8c, ..., 8n).

17. Apparatus (1) according to claim 16, wherein said one or more notch-shaped zones (28; 28'; 28"; 28"') define one or more separating gaps that extend parallel to said orthogonal plane.

18. Apparatus (1) according to claim 17, wherein two notch-shaped zones (28) are provided that define two separating coplanar gaps that extend from a central zone of said plate-shaped element (27) in opposite directions towards a lower end and towards an upper end of said plate-shaped element (27) and leave a continuity portion of material (29) defined in said central zone of said plate-shaped element (27).

19. Apparatus (1) according to claim 17, wherein there is a single notch-shaped zone (28') that defines a separating gap that extends for a fraction of said height to a lower end of said plate-shaped element (27') and leaves a continuity portion of material (29') defined in an upper zone of said plate-shaped element (27').

20. Apparatus (1) according to claim 17, wherein there are several notch-shaped zones (28‴) that define a plurality of separating gaps extending on respective planes parallel to said orthogonal plane for a fraction of said height and define respective material continuity portions (29") placed at ends that are mutually opposite a central zone of said plate-shaped element (27").

21. Apparatus (1) according to claim 17, wherein there are several notch-shaped zones (28‴) that define a plurality of separating gaps extending on respective planes parallel to said orthogonal plane over the entire height of said plate-shaped element (27‴) and define respective material continuity portions (29‴) that extend over the entire height and are placed at ends that are mutually opposite a central zone of said plate-shaped element (27‴).

22. Apparatus (1) according to claim 8 or according to one of claims 9 to 21 as appended to claim 8, wherein there are longitudinal mechanical fixing means (38) and at least one connecting key (37, 37') arranged for connecting together at least two adjacent upper modular trunks (8a, 8b, 8c, ..., 8n), and wherein said elastically yielding joining means comprises a plurality of spring elements (30) cooperating with said longitudinal mechanical fixing means (38) and with said connecting key (37, 37') to exert the action of mutual connection and configured to exert between the two aforesaid adjacent upper modular trunks (8a, 8b, 8c, ..., 8n) a clamping force having a component parallel to said advancement direction (X) and arranged for yielding elastically so as to permit corresponding rotation of at least one upper modular trunk (8a) with respect to an adjacent upper modular trunk (8b); and wherein said spring elements of said plurality of spring elements (30) are distributed on a plane that is orthogonal to the axes of longitudinal extent (M) of said upper modular trunks (8a, 8b, 8c, ..., 8n),

23. Apparatus (1) according to claim 8 or according to one of claims 9 to 22 as appended to claim 8, wherein said elastically yielding joining means comprise a pair of flange elements (31, 32; 31', 32') that protrude transversely from the respective side walls (20a, 20b, ..., 20n) of the at least two upper modular trunks (8a, 8b, 8c, ..., 8n) and are clamped together by longitudinal mechanical fixing members (39) arranged at a certain arm distance (D) from the respective side walls (20a, 20b, ..., 20n) measured in a direction that is transversely horizontal with respect to a direction of longitudinal extent (M) of upper modular trunks (8a, 8b, 8c, ..., 8n).

24. Apparatus (1) according to claim 23, wherein said flange elements (31, 32) protrude from a single face of the respective side walls (20a, 20b, ..., 20n).

25. Apparatus (1) according to claim 23, wherein said flange elements (31', 32') protrude bilaterally from opposite faces of the respective side walls (20a, 20b, ..., 20n) so as to be geometrically symmetrical with respect to the side walls (20a, 20b, ..., 20n) and to guide the rotation of an upper modular trunk (8a) with respect to another adjacent upper modular trunk (8b) in a balanced manner.

26. Apparatus (1) according to claim 3 or according to one of claims 4 to 25 as appended to claim 3, wherein said constraint support and position variation actuator means (33, 36) comprise, for a respective pair of said constraint elements (35), a pair of lifting and support devices (33) configured to adjust said longitudinally uniform spacing between said upper conveyor (6) and said lower conveyor (7) and a corresponding pair of differentiated actuating devices (36) configured to define said longitudinally differentiated spacing between said first upper portion (15) and said first lower portion (16), said at least one pair of differentiated actuating devices (36) being fitted to at least one of said frame-support structures (19) situated in said first conveying zone (C).

27. Apparatus (1) according to claim 26, wherein said constraint support and position variation actuators means (33, 36) comprise for each constraint element (35) a respective sliding hinge connecting unit (34, 35; 34') arranged for connecting - at the respective constraint element (35) - a portion of upper modular trunk (8a, 8b, 8c, ..., 8n) to the respective frame support structure (19) permitting a corresponding rotation of said constraint element (35) and thus a corresponding longitudinal sliding of said upper modular trunk (8a, 8b, 8c, ..., 8n), said sliding hinge connecting unit (34, 35; 34') being configured to enable said upper modular trunk (8a, 8b, 8c, ..., 8n) to rotate and translate along an axis of longitudinal extent (M) of said upper modular trunk (8a, 8b, 8c, ..., 8n).

28. Apparatus (1) according to claim 27, wherein said pair of lifting and support devices (33) comprises a vertical screw part (53) that is drivable in a synchronized manner - by synchronization bars (43) - with further screw elements provided in said frame-support structures (19) - to raise evenly said constraint elements (35) and thus said upper support and guide frame (8) with respect to said lower support and guide frame (9) to adjust said longitudinally uniform spacing.

29. Apparatus (1) according to claim 28, wherein said frame support structure (19) comprises a movable vertical guide upper portion (33a, 33a') and a stationary lower portion (33b), said upper portion (33a, 33a') being configured to support said sliding hinge connecting unit (34, 35; 34'), said pair of differentiated actuating devices (36) comprising at least one motorised screw nut part (56) that is connected to said upper portion (33a, 33a') - and thus to said sliding hinge connecting unit (34, 35; 34') - and is configured to engage the respective screw part (53), said motorised screw nut part (56) being drivable in a controlled manner to vary the height of the respective sliding hinge connecting unit (34, 35; 34') to adjust said longitudinally differentiated spacing.

30. Apparatus (1) according to one of claims 27 to 29, wherein said sliding hinge connecting unit (34, 35; 34') comprises pin means (35a) and rotatable coupling hole means (34a, 34a') that cooperate together to permit reciprocal rotation, anti-sliding means (35c, 35f) arranged at the opposite ends of said pin means (35a) and configured to prevent a sliding of said pin means (35a), plate means (35b, 35d, 34b', 34d') being further provided that are coupled with said pin means (35a) and configured by respective slot means (34c, 34c') to permit also a translating component parallel to said direction of longitudinal extent (M) of said upper modular trunks (8a, 8b, 8c, ..., 8n) so as to enable rotational translation of upper modular trunks (8a, 8b, 8c, ..., 8n) with respect to said frame support structure (19).

31. Apparatus (1) according to any one of the preceding claims, wherein to sliding tracks (24, 25) for said upper conveyor belt (6) are connected to said upper support and guide frame (8), and wherein said geometry variator means comprise one or more spacing elements arranged for supporting and adjusting the position of said sliding tracks with respect to said upper support and guide frame (8) to vary the tilt of the branch of the conveyor belt that faces said foaming gap (10).

32. Apparatus (1) according to any one of the preceding claims., wherein sliding tracks (24, 25) for said upper conveyor belt (6) are connected to said upper support and guide frame (8), wherein said sliding tracks (24, 25) are defined by contiguous track segments (41, 42; 41', 42'), and wherein adjacent ends of said contiguous track segments (41, 42; 41', 42') are reciprocally movable to permit a relative movement between two adjacent upper modular trunks (8a, 8b, 8c, ..., 8n).

33. Method for continuous process foaming of a panel (2), of the type comprising an intermediate layer of expanded material (3) covered externally by upper and lower covering and protective layers (4, 5), comprising the steps of:
- providing an upper conveyor (6) and a lower conveyor (7) extending longitudinally from an inlet end (17) to an outlet end (18), advancing, along an advancement direction (X), through said upper conveyor (6) and said lower conveyor (7), a pair of sheet materials intended to generate continuously respectively said covering and protective layers (4, 5),
- providing a modular upper support frame and guide (8) for said upper conveyor (6), said upper support frame and guide (8) being provided with joining elements that are longitudinally deformable and/or tiltable, and constraining and supporting said upper support and guide frame (8) by frame-support structures (19) distributed along said advancement direction, wherein said upper support frame and guide (8) comprises several upper modular trunks (8a, 8b, 8c, ..., 8n) that are connected together by said joining elements,
- providing a first conveying zone (C) that extends from said inlet end (17) and is defined by a first upper portion (15) of said upper conveyor (6) that is above and by a lower first portion (16) of said lower conveyor (7) with respect to said advancement direction (X), wherein said first upper portion (15) is defined by said upper modular trunks (8a, 8b, 8c, ..., 8n), and wherein said first lower portion (16) is defined by several lower modular trunks of said lower conveyor (7),
- providing a dispensing zone (12) upstream of said inlet end (17) and leading to said first conveying zone (C) and arranging dispensing means (11) in said dispensing zone (12),
- making said pair of sheet materials intended to generate respectively said covering and protective layers (4, 5) converge on said inlet end (17),
- adjusting a longitudinally uniform spacing, along said advancement direction (X), between said upper conveyor (6) and said lower conveyor (7) to define a foaming gap (10) corresponding to a desired outlet thickness (S) for said panel (2),
- dispensing by said dispensing means (11) a mixture of reactive resins intended to generate said intermediate layer (3) of expanded material between said conveyed sheet materials,
- varying the reciprocal position between said first upper portion (15) and said first lower portion (16) is provided through geometry variator means in a desired manner so as to modify the geometric configuration of the foaming gap (10) in said first conveying zone (C) and define a longitudinally differentiated spacing along said advancement direction (X) between said first upper portion (15) and said first lower portion (16) to guide and facilitate the expansion of the foam generated by said mixture of reactive resins, so as to minimize the quantity of expanding agent required and optimize cellulation of said foam.

34. Method according to claim 33, wherein setting the reciprocal differentiated position between said first upper portion (15) and said first lower portion (16) comprises a step of conferring on said foaming gap (10) in said first conveying zone (C) a longitudinally divergent shape with an increasing transit section along said advancement direction (X), so as to reduce the quantity of expanding agent required by a value variable between 2% to 20% of the quantity necessary to obtain similar foam conditions in the case of a gap with a longitudinally constant section.

35. Method according to claim 33 or 34, wherein the differentiated reciprocal position between said first upper portion (15) and said first lower portion (16) is set by the bending and shear elastic deformation of at least one of the upper modular trunks (8a, 8b, 8c, ..., 8n) making up said first upper portion (15) of said upper conveyor (6).

36. Method according to one of claims 33 to 35, wherein the differentiated reciprocal position between said first upper portion (15) and said first lower portion (16) is set by the bending elastic deformation at an interface and connection zone between adjacent upper modular trunks (8a, 8b, 8c, ..., 8n) making up said first upper portion (15) of said upper conveyor (6).

37. Method according to one of claims 33 to 36, wherein the step of setting the differentiated reciprocal position between said first upper portion (15) and said first lower portion (16) is achieved by rotating at least one of the upper modular trunks (8a, 8b, 8c, ..., 8n) making up said first upper portion (15) with respect to said first lower portion (16).

38. Method according to one of claims 33 to 37, wherein the differentiated reciprocal position between said first upper portion (15) and said first lower portion (16) is set by differentiating the position of vertical support constraint elements (35) for said first upper portion (15) with respect to said preset longitudinally uniform spacing for said upper support and guide frame (8) that is common to all the frame-support structures (19).
